(19) Europäisches Patentamt / European Patent Office / Office européen des brevets

(11) **EP 4 528 599 A1**

(12) **EUROPEAN PATENT APPLICATION**

(43) Date of publication:
26.03.2025 Bulletin 2025/13

(21) Application number: 24192196.4

(22) Date of filing: 31.07.2024

(51) International Patent Classification (IPC):
**G06N 5/01** (2023.01)   **G06N 7/01** (2023.01)

(52) Cooperative Patent Classification (CPC):
**G06N 5/01; G06N 7/01**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: 04.08.2023   JP 2023127482

(71) Applicants:
• **FUJITSU LIMITED**
  **Kawasaki-shi, Kanagawa 211-8588 (JP)**

• **The Governing Council of the University of Toronto**
  **Toronto, Ontario M5G 1L5 (CA)**

(72) Inventors:
• **BAGHERBEIK, Mohammad**
  **Toronto, M5S 1A1 (CA)**
• **SHEIKHOLESLAMI, Ali**
  **Toronto, M5S 1A1 (CA)**

(74) Representative: **Haseltine Lake Kempner LLP**
**Cheapside House**
**138 Cheapside**
**London EC2V 6BJ (GB)**

(54) **DATA PROCESSING APPARATUS, COMPUTER PROGRAM, AND DATA PROCESSING METHOD**

(57)   A storage unit stores one of flow and distance matrices for an assignment problem having an evaluation function represented by a matrix operation of the flow and distance matrices, and a processing unit selects first and second entities from entities to be assigned to destinations, reads at least one first matrix element corresponding to the first and second entities from the stored flow or distance matrix, generates at least one second matrix element for the other of the flow and distance matrices, which is a patterned matrix, based on the first and second entities, calculates a change in the value of the evaluation function resulting from an assignment change of changing the destination of the first or second entity, using the first and second matrix elements, determines based on the change whether to allow the assignment change, and updates an assignment state when determining to allow the assignment change.

FIG. 4

EP 4 528 599 A1

**Description**

FIELD

The embodiments discussed herein relate to a data processing apparatus, a computer program, and a data processing method.

BACKGROUND

Quadratic assignment problem (QAP) is an example of assignment problems that are one of combinatorial optimization problems. A QAP aims to find, when n entities (facilities or others) are to be assigned to n destinations, an assignment that minimizes the sum of the products of flows (costs for transporting goods between the facilities) between the entities and distances between the destinations respectively assigned to the entities. That is, the QAP is a problem to search for an assignment that minimizes the value of an evaluation function given by equation (1). The evaluation function evaluates the cost of an assignment state and is also called a cost function or the like.

$$C(\phi) = \sum_{i=1}^{n} \sum_{j=1}^{n} f_{i,j} d_{\phi(i),\phi(j)} + \sum_{i=1}^{n} b_{i,\phi(i)} \tag{1}$$

In equation (1), $f_{i,j}$ denotes the flow between the entities with identification numbers (hereinafter, referred to as IDs, simply) = i and j, and $d_{\varphi(i),\varphi(j)}$ denotes the distance between the destinations assigned to the entities with IDs = i and j. $b_{i,\varphi(i)}$ denotes a bias coefficient. The bias coefficient $b_{i,\varphi(i)}$ denotes a fixed cost to assign an entity with ID = i to a destination with ID = $\varphi(i)$.

By the way, there are Ising devices (also called Boltzmann machines) using an Ising-type evaluation function (also called an energy function) as devices that solve large-scale discrete optimization problems, which von Neumann computers are ill-equipped to handle.

An Ising device transforms a combinatorial optimization problem into an Ising model that expresses the behavior of magnetic spins. The Ising device then finds a state of the Ising model that minimizes the value (equivalent to energy) of an Ising-type evaluation function using a Markov-chain Monte Carlo method with simulated annealing algorithm, replica exchange algorithm (also called parallel tempering), or another. The state of the Ising model is represented by a combination of the values of a plurality of state variables. Here, each state variable has a value of 0 or 1.

Techniques for solving QAPs using such a Boltzmann machine have been proposed.

An Ising-type evaluation function for the QAPs is given by equation (2).

$$E = \frac{1}{2} x^T W x \tag{2}$$

In equation (2), x is a vector of state variables and represents the state of assignment of n entities to n destinations. $x^T$ is represented as $(x_{1,1}, ..., x_{1,n}, x_{2,1}, ..., x_{2,n}, ..., x_{n,1}, ..., x_{n,n})$. $x_{i,j} = 1$ indicates that the entity with ID = i is assigned to the destination with ID = j, and $x_{i,j} = 0$ indicates that the entity with ID = i is not assigned to the destination with ID = j.

W is a matrix of weight values and is represented by a matrix operation of a flow matrix, which is a matrix of the flows between the entities, and a matrix of the distances between the destinations. The weight matrix W is represented as equation (3) using the flows $f_{i,j}$ of the flow matrix and a distance matrix D.

$$W = \begin{bmatrix} f_{1,1}D & f_{1,2}D & \dots & f_{1,n}D \\ f_{2,1}D & f_{2,2}D & \dots & f_{2,n}D \\ \vdots & \vdots & \ddots & \vdots \\ f_{n,1}D & f_{n,2}D & \dots & f_{n,n}D \end{bmatrix} \tag{3}$$

In the case of a large-scale assignment problem, the weight matrix W may contain a great amount of information, and therefore a memory may fail to hold the weight matrix W. To deal with this problem, the following technique has been proposed, which does not hold such a weight matrix W directly but obtains weight values, which are used for calculating a change in the value of an evaluation function, on the basis of flows and distances (see, for example, U.S. Patent Application Publication No. 2021/0326679).

As the scale of an assignment problem increases, the amount of information regarding flows and distances, which is stored in a memory, increases accordingly. Therefore, the conventional technique that obtains weight values on the basis of flows and distances may be unable to reduce memory footprint sufficiently.

SUMMARY

It is desirable to provide a data processing apparatus, a computer program, and a data processing method that are able to reduce memory footprint in solving an assignment problem.

According to an embodiment of one aspect, there is provided a data processing apparatus including: a storage unit for storing one of either a flow matrix or a distance matrix for an assignment problem having an evaluation function represented by a matrix operation of the flow matrix and the distance matrix; and a processing unit for selecting a first entity and a second entity from a plurality of entities to be assigned to a plurality of destinations, reading, from the storage unit, at least one first matrix element corresponding to the first entity and the second entity out of the one of either the flow matrix or the distance matrix, generating at least one second matrix element for another of either the flow matrix or the distance matrix, which is a patterned matrix, based on the first entity and the second entity, calculating a change in a value of the evaluation function resulting from an assignment change of changing a destination of the first entity or the second entity, using the at least one first matrix element and the at least one second matrix element, determining based on the change whether to allow the assignment change, and updating an assignment state upon determining to allow the assignment change.

BRIEF DESCRIPTION OF DRAWINGS

The present invention is described, by way of example only, with reference to the following drawings, in which:

FIG. 1 illustrates an example of solving a quadratic assignment problem (QAP);
FIG. 2 illustrates an example of solving a generalized quadratic assignment problem (GQAP);
FIG. 3 illustrates an example of calculation of updating a cache matrix;
FIG. 4 illustrates an example of a data processing apparatus according to a first embodiment;
FIGS. 5A to 5C each illustrate a type of assignment problem and an example of a generable flow matrix F or distance matrix D;
FIG. 6 illustrates an example of a data processing apparatus according to a second embodiment;
FIG. 7 illustrates an example of replica circuits;
FIG. 8 illustrates an example of an F/D matrix element generation circuit;
FIG. 9 illustrates an example of a ΔC calculation circuit;
FIG. 10 illustrates an example of an assignment change judgment circuit.
FIG. 11 is an example of a constraint violation detection circuit;
FIG. 12 illustrates an example of a local field update circuit;
FIG. 13 illustrates an example of a differential matrix generation circuit;
FIG. 14 is a flowchart illustrating an example of processing procedure of the data processing apparatus according to the second embodiment;
FIG. 15 is a flowchart illustrating an example of a replica initialization process;
FIG. 16 is a flowchart illustrating an example of a search process (exchange).
FIG. 17 is a flowchart illustrating an example of a search process (relocation);
FIG. 18 is a flowchart illustrating an example of an F/D matrix element generation process;
FIG. 19 illustrates an example of replica circuits in a data processing apparatus according to a third embodiment; and
FIG. 20 illustrates an example of hardware of a computer that is an example of a data processing apparatus.

DESCRIPTION OF EMBODIMENTS

Hereinafter, embodiments will be described with reference to the accompanying drawings.

A data processing apparatus of the embodiments finds a solution to an assignment problem with local search. Examples of the assignment problem include a quadratic assignment problem (QAP), a generalized quadratic assignment problem (GQAP), and a quadratic semi-assignment problem (QSAP). The following describes the QAP, GQAP, QSAP, and local search.

(QAP)

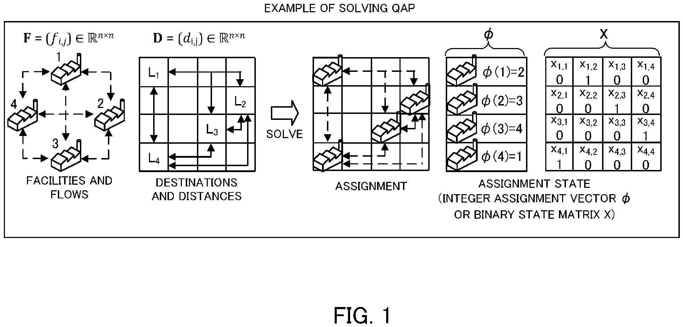

FIG. 1 illustrates an example of solving a QAP. A QAP is a problem to find, when n entities (facilities or others) are to be assigned to n destinations, an assignment that minimizes the sum of the products of flows between the entities and distances between the destinations respectively assigned to the entities.

In the example of FIG. 1, four facilities given identification numbers (hereinafter, referred to as IDs, simply) 1 to 4 are assigned to four destinations ($L_1$ to $L_4$).

A flow matrix representing the flows between the n entities is represented by equation (4)

$$\mathbf{F} = (f_{i,j}) \in \mathbb{R}^{n \times n} \qquad (4)$$

The flow matrix F is an n-by-n matrix, where $f_{i,j}$ denotes the flow in the i-th row and j-th column and represents the flow between the entities with IDs = i and j. For example, the flow between the facility with ID = 1 and the facility with ID = 2 in FIG. 1 is represented as $f_{1,2}$.

A distance matrix representing the distances between the n destinations is represented by equation (5).

$$\mathbf{D} = (d_{i,j}) \in \mathbb{R}^{n \times n} \qquad (5)$$

The distance matrix D is an n-by-n matrix, where $d_{i,j}$ denotes the distance in the i-th row and j-th column and represents the distance between the destinations with IDs = i and j. For example, the distance between the destination ($L_1$) with ID = 1 and the destination ($L_2$) with ID = 2 in FIG. 1 is represented as $d_{1,2}$.

A bias matrix representing n×n bias coefficients is represented by equation (6).

$$\mathbf{B} = (b_{i,j}) \in \mathbb{R}^{n \times n} \qquad (6)$$

The QAP is solved by finding an assignment that minimizes equation (1). The state of assignment of the n entities to the n destinations is represented by an integer assignment vector $\varphi$ or a binary state matrix X. The vector $\varphi$ is a permutation of a set $\Phi_n$, and $\Phi_n$ is the set of all permutations of the set N = {1, 2, 3, ..., n}. A binary variable $x_{i,j}$ included in the binary state matrix X is represented by equation (7).

$$x_{i,j} = \begin{cases} 1 & if \quad \phi(i) = j \\ 0 & otherwise, \end{cases} \quad \mathbf{X} = (x_{i,j}) \in \{0, 1\}^{n \times n} \qquad (7)$$

Referring to the example of FIG. 1, the facility with ID = 1 is assigned to the destination with ID = 2, the facility with ID = 2 to the destination with ID = 3, the facility with ID = 3 to the destination with ID = 4, and the facility with ID = 4 to the destination with ID = 1. The integer assignment vector $\varphi$ contains the following: $\varphi(1) = 2$, $\varphi(2) = 3$, $\varphi(3) = 4$, and $\varphi(4) = 1$. The binary state matrix X has a value of 1 at $x_{1,2}$, $x_{2,3}$, $x_{3,4}$, and $x_{4,1}$ and a value of 0 at the others $x_{i,j}$.

QAP has two variants: symmetric where one or both of the flow matrix and distance matrix are symmetric, and asymmetric where both the flow matrix and the distance matrix are asymmetric. Note that a QAP with symmetric matrices is directly transferable to a QAP with asymmetric matrices.

(GQAP)

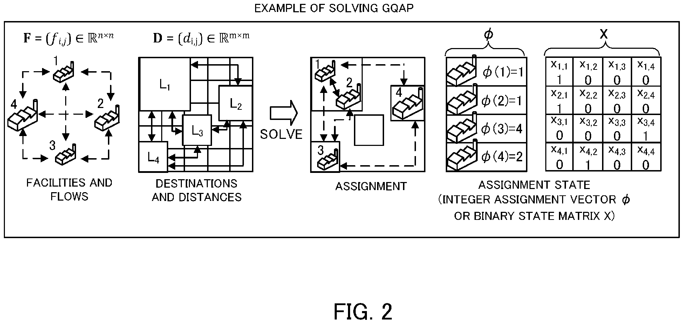

FIG. 2 illustrates an example of solving a GQAP. A GQAP is a problem to find, when n entities are to be assigned to m destinations, an assignment that minimizes the sum of the products of flows between the entities and distances between the destinations to which the entities are assigned. In the GQAP, the number of entities n may be different from the number of destinations m. In the GQAP, a plurality of entities are allowed to be assigned to each destination.

In the example of FIG. 2, four facilities with IDs = 1 to 4 are each assigned to one of four destinations ($L_1$ to L4) .

A flow matrix F representing the flows between the n entities is represented by equation (4).

In the GQAP, a binary state matrix X, a distance matrix D, and a bias matrix B are represented by equations (8), (9), and (10), respectively.

$$x_{i,j} = \begin{cases} 1 & if \quad \phi(i) = j \\ 0 & otherwise, \end{cases} \quad \mathbf{X} = (x_{i,j}) \in \{0,1\}^{n \times m} \tag{8}$$

$$\mathbf{D} = (d_{i,j}) \in \mathbb{R}^{m \times m} \tag{9}$$

$$\mathbf{B} = (b_{i,j}) \in \mathbb{R}^{n \times m} \tag{10}$$

The distance matrix D of equation (9) has non-zero diagonal elements to account for intra-destination routing.

The GQAP as well is solved by finding an assignment that minimizes equation (1). In the GQAP, however, each entity (for example, each facility in FIG. 2) has a unique size, and each destination has an upper capacity limit. The size is represented by equation (11), and the upper capacity limit is represented by equation (12).

$$\mathbf{S} = (s_i) \in \mathbb{R}^n \tag{11}$$

$$\mathbf{L} = (L_j) \in \mathbb{R}^m \tag{12}$$

For assigning one entity or a plurality of entities to a single destination, a vector representing the unused capacity of each destination, as represented by equation (13), is introduced so as to ensure that the cumulative size of entities does not exceed the upper capacity limit of a destination to which the entities are assigned.

$$\mathbf{U}(\phi) = (U_i) \in \mathbb{R}^m, \quad U_i(\phi) = L_i - \sum_{j=1}^{n} s_j 1_{\phi(j)=i} \tag{13}$$

The assignment is performed using the unused capacities so as to satisfy inequality constraints given by equation (14) (so as to ensure that the unused capacities do not fall below 0).

$$U_i \geq 0, \forall i = [1, m] \tag{14}$$

Referring to the example of FIG. 2, two facilities with IDs = 1 and 2 are assigned to the destination with ID = 1, the facility with ID = 3 is assigned to the destination with ID = 4, and the facility with ID = 4 is assigned to the destination with ID = 2. That is, the number of entities and the number of destinations are different. An integer assignment vector φ contains the following: $\varphi(1) = 1$, $\varphi(2) = 1$, $\varphi(3) = 4$, and $\varphi(4) = 2$. The binary state matrix X has a value of 1 at $x_{1,1}$, $x_{2,1}$, $x_{3,4}$, and $x_{4,2}$ and a value of 0 at the others $x_{i,j}$.

(QSAP)

QSAP is a variant of GQAP. In the QSAP, the number of entities n and the number of destinations m may be different, as in the GQAP. In the QSAP, however, all entities (for example, facilities in FIG. 2) have a size of 0, and all destinations have a capacity of 0. Therefore, there is no inequality constraint.

The QSAP as well is solved by finding an assignment that minimizes equation (1).

(Local Search)

Local search is to search for candidate solutions within the neighborhood of states that are reachable via changes of the current state. One local search method for GQAP is a pairwise exchange of entities. In this technique, two entities are selected and their destinations are exchanged. A change in the value of the evaluation function (equation (1)) resulting from the exchange of the destinations (identified by IDs = $\varphi(a)$ and $\varphi(b)$) of the two entities (identified by IDs = a and b) is obtained from equations (15) and (16).

$$\Delta C(\phi(a) \leftrightarrow \phi(b)) = \sum_{i=1, i \neq a,b}^{n} (f_{b,i} - f_{a,i})(d_{\phi(a),\phi(i)} - d_{\phi(b),\phi(i)}) \quad (15)$$
$$+ \Delta B(\phi(a) \leftrightarrow \phi(b))$$

$$\Delta B(\phi(a) \leftrightarrow \phi(b)) = b_{a,\phi(b)} + b_{b,\phi(a)} - b_{a,\phi(a)} - b_{b,\phi(b)} \quad (16)$$

In the GQAP, an entity is relocatable (rearrangeable) to a new destination, regardless of whether the entity has already been assigned to a destination. A change in the value of the evaluation function for an assignment change of an entity with ID = b from its current destination to a destination with ID = a (ID = $\varphi$(a)) is obtained from equations (17) and (18).

$$\Delta C(\phi(a) \leftarrow b) = \sum_{i=1}^{n} f_{a,i}(d_{b,\phi(i)} - d_{\phi(a),\phi(i)}) \quad (17)$$
$$+ \Delta B(\phi(a) \leftarrow b)$$

$$\Delta B(\phi(a) \leftarrow b) = b_{a,b} - b_{a,\phi(a)} \quad (18)$$

In the GQAP, the $\Delta C$ calculations take up the majority of the total processing time of a data processing apparatus searching for a solution to the assignment problem. The $\Delta C$ calculation using equation (15) is easily vectorized using a dot product, if not for the condition that the calculations for i = a and b are skipped.

By adding an additional product of flow and distance as a compensation term (comp), as represented in equations (19) and (20), the condition may be removed.

$$\Delta C(\phi(a) \leftrightarrow \phi(b)) = \sum_{i=1}^{n} (f_{b,i} - f_{a,i})(d_{\phi(a),\phi(i)} - d_{\phi(b),\phi(i)}) \quad (19)$$
$$+ comp + \Delta B(\phi(a) \leftrightarrow \phi(b))$$

$$comp = f_{a,b} * (2d_{\phi(a),\phi(b)} - d_{\phi(a),\phi(a)} - d_{\phi(b),\phi(b)}) \quad (20)$$

The local search determines on the basis of a $\Delta C$ value calculated as above whether to accept a proposal for an assignment change that causes the change $\Delta C$ in the value of the evaluation function. For example, whether to accept the proposal is determined based on pre-defined criteria such as a greedy approach. In this greedy approach, an assignment change that decreases the value of the evaluation function is accepted. With the greedy approach, a proposal acceptance rate (PAR) is high at the start of the search, but later tends to approach 0 as the search gets stuck in a local minimum of the evaluation function and no further improving changes are found.

Instead of the greedy approach, a stochastic local search algorithm such as a simulated annealing algorithm is usable. The stochastic local search algorithm uses an acceptance probability ($P_{acc}$) of a Metropolis algorithm given by equation (21) while using a temperature parameter (T) to introduce randomness into assignment changes.

$$P_{acc} = min\{1, exp(-\Delta C/T)\} \quad (21)$$

As T increases toward infinity, $P_{acc}$ and PAR increase to where all proposals are accepted, regardless of $\Delta C$ values. As T is lowered and approaches 0, the proposal acceptance becomes greedy, and PAR tends to become 0 as the search eventually gets stuck in a local minimum of the evaluation function.

(Vectorization of ΔC Calculation)

In the QAP, there is a Boltzmann machine caching method (hereinafter, referred to as a BM$ method) as a method of vectorizing the ΔC calculation. The BM$ method is a method of calculating and storing (caching) local fields that are partial ΔC values corresponding to the flipping of bits in a binary state matrix. In the case of the QAP, when a proposal for an assignment change is accepted, an n-by-n matrix (hereinafter, referred to as a cache matrix H) based on local fields is updated in time proportional to $n^2$. Note that ΔC may be calculated in time that does not depend on n. The following describes extension of the BM$ method to the GQAP.

In the case of the GQAP, the cache matrix H is generated at the start of a search process using equation (22) in time proportional to $m \times n^2$.

$$\mathbf{H} = \mathbf{F}\mathbf{D}^{\mathbf{T}}\mathbf{X} + \mathbf{B} = (h_{i,j}) \in \mathbb{R}^{n \times m} \qquad (22)$$

Equation (19) representing ΔC for a destination exchange and equation (17) representing ΔC for a relocation are respectively reformulated into equations (23) and (24) using cached local fields.

$$\Delta C(\phi(a) \leftrightarrow \phi(b)) = h_{a,\phi(b)} + h_{b,\phi(a)} - h_{a,\phi(a)} - h_{b,\phi(b)} \qquad (23)$$
$$+ comp$$

$$\Delta C(\phi(a) \leftarrow b) = h_{a,b} - h_{a,\phi(a)} \qquad (24)$$

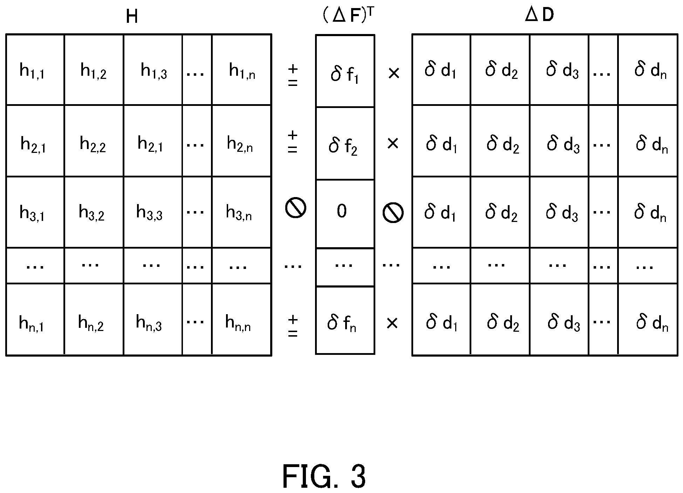

When a proposal for an assignment change is accepted, the cache matrix H is updated using a Kronecker Product, as illustrated in FIG. 3. At this time, a vector ΔF and a vector ΔD are first calculated using equations (25) and (26). Then, the cache matrix H is updated using equation (27) .

$$\Delta_a^b \mathbf{F} = \mathbf{F}_{b,*} - \mathbf{F}_{a,*} \qquad (25)$$

$$\Delta_{\phi(b)}^{\phi(a)} \mathbf{D} = \mathbf{D}_{\phi(a),*} - \mathbf{D}_{\phi(b),*} \qquad (26)$$

$$\mathbf{H}^{t+1} = \mathbf{H}^t + (\Delta_a^b \mathbf{F})^{\mathbf{T}} \otimes \Delta_{\phi(b)}^{\phi(a)} \mathbf{D} \qquad (27)$$

FIG. 3 illustrates an example of calculation of updating a cache matrix.

As illustrated in FIG. 3, the update is performed on a single row of the cache matrix H at a time. Rows with zero elements in the vector ΔF are skipped.

Similarly, when a proposal for the assignment change of relocation is accepted, the cache matrix H is updated using equation (28). As the relocation involves the movement of a single entity to a destination only, the update of the cache matrix H does not need the vector ΔF, but uses a flow ($F_{a,*}$) on one row instead.

$$\mathbf{H}^{t+1} = \mathbf{H}^t + (\mathbf{F}_{a,*})^{\mathbf{T}} \otimes \Delta_{\phi(a)}^b \mathbf{D} \qquad (28)$$

Note that, depending on the dimension of the assignment problem and the topology of the flow matrix F and distance matrix D, the transposed matrix of the cache matrix H may be stored, instead of the cache matrix H. One example where this may be beneficial is for instances with n > m. In this case, by using the transposed matrix of the cache matrix H, more row elements may be updated per clock cycle, provided that a sufficient number of parallel compute units exist. Another example is that the contents of the distance matrix D produce vectors ΔD that are sparser than vectors ΔF on average. In this example, a large number of transpose row updates may be skipped. This could reduce the total computation time needed for updating the cache matrix H.

As with the local fields, the unused capacities represented by equation (13) are usable as constraint fields. Both a proposal for a destination exchange and a proposal for a relocation affect the constraint fields. With the constraint fields, it is expected to simplify the calculations needed for checking if a proposal results in any constraint being violated. First, a net change $\Delta S$ in needed entity sizes due to a proposal for a destination exchange or relocation is calculated with equation (29) or (30).

$$\Delta S(\phi(a) \leftrightarrow \phi(b)) = s_a - s_b \qquad (29)$$

$$\Delta S(\phi(a) \leftarrow b) = -s_a \qquad (30)$$

Then, by adding the $\Delta S$ value to both the constraint fields as represented in equations (31) and (32), the constraint fields for the proposal being accepted are obtained.

$$U_{\phi(a)}^{t+1} = U_{\phi(a)}^t + \Delta S \qquad (31)$$

$$U_{\phi(b)}^{t+1} = U_{\phi(b)}^t - \Delta S \qquad (32)$$

Then, a "violated?" flag indicating whether a constraint has been violated is set as given in equation (33). If either of the constraint fields is over-capacity as a result of the proposed assignment change, the "violated?" flag is set to 1.

$$violated? = \begin{cases} 1 & U_{\phi(a)}^{t+1} < 0 \quad or \quad U_{\phi(b)}^{t+1} < 0 \\ 0 & otherwise \end{cases} \qquad (33)$$

In the case where the "violated?" flag has a value of 1, the proposal for the assignment change is rejected regardless of a $\Delta C$ value. To simplify the computations, an acceptance threshold ($\theta$) given by equation (34) is used instead of the acceptance probability $P_{acc}$ given by equation (21).

$$\theta = T \times LOG(rand(0,1)) \qquad (34)$$

An acceptance criterion using $\theta$ for a proposal is defined by equation (35).

$$accept? = \begin{cases} 1 & !violated? \quad and \quad \Delta C + \theta < 0 \\ 0 & otherwise \end{cases} \qquad (35)$$

By the way, as the scale of an assignment problem increases, the amount of information regarding flows and distances, which is stored in a memory, increases accordingly. A data processing apparatus of a first embodiment, which will be described below, stores one of either a flow matrix F or a distance matrix D in a memory. When calculating $\Delta C$ or updating local fields, the data processing apparatus generates matrix elements for the other of either the flow matrix F or the distance matrix D in a manner described later. This achieves a reduction in memory footprint in solving an assignment problem.

(First Embodiment)

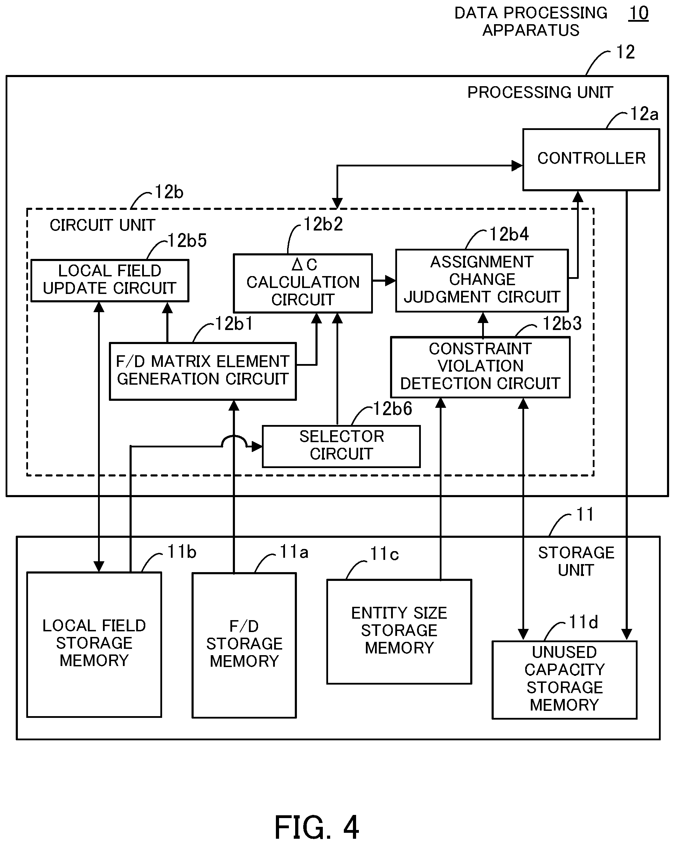

FIG. 4 illustrates an example of a data processing apparatus according to the first embodiment.

The data processing apparatus 10 of the first embodiment includes a storage unit 11 and a processing unit 12.

The storage unit 11 may include a volatile semiconductor memory device such as random-access memory (RAM) or a non-volatile storage device such as a hard disk drive (HDD) or flash memory. The storage unit 11 may include both a volatile semiconductor memory device and a non-volatile storage device.

The storage unit 11 includes an F/D storage memory 11a, a local field storage memory 11b, an entity size storage memory 11c, and an unused capacity storage memory 11d.

The F/D storage memory 11a stores one of either a flow matrix F or a distance matrix D for an assignment problem having an evaluation function represented by a matrix operation of the flow matrix F and distance matrix D. That is, the F/D storage memory 11a does not need to store the other of either the flow matrix F or the distance matrix D.

The local field storage memory 11b stores a cache matrix H containing n×m local fields that is represented by equation (22). In this connection, if the local fields are not used in $\Delta C$ calculations, there is no need to provide the local field storage memory 11b.

The entity size storage memory 11c stores information on the size of each entity (facilities, bags, or others) used for determining whether inequality constraints are satisfied.

The unused capacity storage memory 11d stores information on the unused capacity of each destination represented by equation (13).

The processing unit 12 is implemented by using an electronic circuit such as an application specific integrated circuit (ASIC) or a field programmable gate array (FPGA), for example. Alternatively, the processing unit 12 may be implemented by using a processor such as a central processing unit (CPU), a graphics processing unit (GPU), or a digital signal processor (DSP). The processor runs programs stored in a memory such as RAM (which may be the storage unit 11). A set of processors may be called a multiprocessor or simply a "processor." In addition, the processing unit 12 may include a processor and an electronic circuit such as an ASIC or an FPGA.

In a search process of finding a solution to an assignment problem, the processing unit 12 selects, as candidates for a destination exchange, a first entity and a second entity from a plurality of entities to be assigned to a plurality of destinations. The processing unit 12 then reads, from the storage unit 11, at least one first matrix element corresponding to the first entity and second entity out of the one of either the flow matrix F or the distance matrix D.

For example, in the case of calculating $\Delta C$ with equation (19), the processing unit 12 reads matrix elements (flows) $f_{b,*}$ and $f_{a,*}$ of the flow matrix F or matrix elements (distances) $d_{\varphi(a),*}$ and $d_{\varphi(b),*}$ of the distance matrix D. In the case of calculating $\Delta C$ with equation (23) using local fields, the processing unit 12 reads $f_{a,b}$, or $d_{\varphi(a)\varphi(b)}$, $d_{\varphi(a),\varphi(a)}$, and $d_{\varphi(b),\varphi(b)}$, which are included in equation (20), in order to calculate the compensation term (comp).

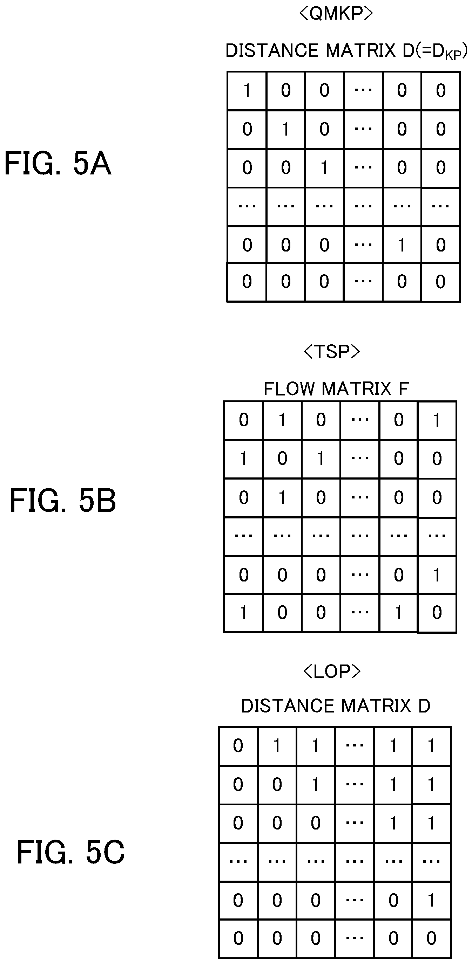

The processing unit 12 generates at least one second matrix element corresponding to the first entity and second entity for the other of either the flow matrix F or the distance matrix D that is a patterned matrix and that depends on the type of the assignment problem. In the case where either the matrix elements (flows) $f_{b,*}$ and $f_{a,*}$ of the flow matrix F or the matrix elements (distances) $d_{\varphi(a),*}$ and $d_{\varphi(b),*}$ of the distance matrix D are read, the other is generated. In the case where either $f_{a,b}$ or $d_{\varphi(a),\varphi(b)}$, $d_{\varphi(a),\varphi(a)}$, and $d_{\varphi(b),\varphi(b)}$ are read, the other is generated. Whether the flow matrix F or the distance matrix D is treated as a patterned matrix, for which at least one matrix element is generated, depends on the type of an assignment problem, which will be described later (see FIGS. 5A to 5C).

The processing unit 12 calculates a change (the above-described $\Delta C$) in the value of the evaluation function resulting from an assignment change of changing the destination of the first entity or second entity, on the basis of the matrix elements read and generated. Then, the processing unit 12 determines based on the $\Delta C$ value whether to allow the assignment change, and updates the assignment state if determining to allow the assignment change. For example, an assignment change of exchanging the destinations of the first entity and second entity is allowed with an acceptance probability ($P_{acc}$) given by equation (21). In the case where the assignment problem has inequality constraints, whether to allow the assignment change is determined as given in equation (33), for example. In the case of calculating $\Delta C$ with equation (23) using local fields, the processing unit 12 updates the cache matrix H when the assignment change is allowed. The cache matrix H is updated using equation (27), for example. In the case where one of either the flow matrix F or the distance matrix D is stored in the storage unit 11, matrix elements for the other of either the flow matrix F or the distance matrix D, which are used for updating the cache matrix H, are generated by the processing unit 12.

In the case of an assignment change of entity relocation, whether to allow the relocation is determined based on $\Delta C$ calculated with equation (17), for example. For the $\Delta C$ calculation in this case as well, matrix elements (matrix elements included in one of either the flow matrix F or the distance matrix D) read from the storage unit 11 and matrix elements generated (matrix elements generated for the other of either the flow matrix F or the distance matrix D) are used.

The processing unit 12 repeats the above processing. In the case of using the simulated annealing algorithm, the processing unit 12 lowers the value of a temperature parameter (T) according to a predetermined temperature change schedule, in order to search for a local minimum of the evaluation function. Then, for example, when a predetermined number of iterations is reached, an assignment state that yields the minimum value of the evaluation function is output as a solution. In the case of using the parallel tempering, a plurality of replicas with different T values each repeat the above processing. Then, the assignment states (or T values) are swapped between replicas with a predetermined swap acceptance probability at predetermined cycles. Then, for example, when a predetermined number of iterations is reached, the assignment state of a replica that yields the minimum value of the evaluation function is output as a solution.

FIG. 4 illustrates an example of the processing unit 12 that performs the above processing. The processing unit 12 includes a controller 12a and a circuit unit 12b.

The controller 12a controls the operation of the circuit unit 12b. In addition, the controller 12a holds the current assignment state, the current value of the evaluation function, the minimum value of the evaluation function obtained so far, and an assignment state that yields the minimum value. Then, the controller 12a selects a first entity and a second entity as candidates for a destination exchange, updates the assignment state, and performs other processes. Furthermore, the controller 12a controls data read and write on the storage unit 11.

The circuit unit 12b includes an F/D matrix element generation circuit 12b1, a $\Delta C$ calculation circuit 12b2, a constraint violation detection circuit 12b3, an assignment change judgment circuit 12b4, a local field update circuit 12b5, and a selector circuit 12b6.

The F/D matrix element generation circuit 12b1 supplies matrix elements of one of either the flow matrix F or the distance matrix D stored in the F/D storage memory 11a to the $\Delta C$ calculation circuit 12b2 and local field update circuit 12b5 under the control of the controller 12a. In addition, the F/D matrix element generation circuit 12b1 generates matrix elements for the other of either the flow matrix F or the distance matrix D that is not stored in the F/D storage memory 11a under the control of the controller 12a, and then supplies the generated matrix elements to the $\Delta C$ calculation circuit 12b2 and local field update circuit 12b5.

The $\Delta C$ calculation circuit 12b2 calculates $\Delta C$ for a destination exchange or relocation.

The constraint violation detection circuit 12b3 determines on the basis of the sizes of the first entity and second entity and the unused capacities of their destinations read from the storage unit 11 whether the destination exchange between the first entity and the second entity results in a constraint of over-capacity being violated. In addition, the constraint violation detection circuit 12b3 may update the unused capacities of the destinations when the destinations of the first entity and second entity are exchanged.

The assignment change judgment circuit 12b4 inputs $\Delta C$ and $\theta$ obtained from equation (34) to equation (35) to determine whether to allow the assignment change. In this connection, if the constraint violation detection circuit 12b3 detects a constraint violation, the assignment change is not allowed.

When the assignment change is allowed, the local field update circuit 12b5 updates the cache matrix H containing $n \times m$ local fields via equation (27) or equation (28).

The selector circuit 12b6 selects local fields that the $\Delta C$ calculation circuit 12b2 uses to calculate $\Delta C$ with equation (23) or equation (24), and supplies the selected local fields to the $\Delta C$ calculation circuit 12b2.

A more specific example of the above circuits will be descried in a second embodiment.

(Types of Assignment Problems and Examples of Generable Flow Matrix F and Distance Matrix D)

FIGS. 5A to 5C each illustrate a type of assignment problem and an example of a generable flow matrix F or distance matrix D. FIG. 5A illustrates an example of a distance matrix D that the processing unit 12 is able to generate in a quadratic multiple knapsack problem (QMKP). FIG. 5B illustrates an example of a flow matrix F that the processing unit 12 is able to generate in a traveling salesman problem (TSP). FIG. 5C illustrates an example of a distance matrix D that the processing unit 12 is able to generate in a linear ordering problem (LOP).

A knapsack problem is a problem to find, when items each given a value and a weight (or capacity) are to be placed in knapsacks each with a weight limit (or a capacity limit), a packing plan that maximizes the total profit. That is, the knapsack problem is an assignment problem that uses the above-described entities (facilities or others) as the items and the above-described destinations (locations or others) as the knapsacks. The QMKP uses values (singular values) given to the items themselves and values (quadratic values) that are given when two items selectable from all items are placed in the same knapsack.

In the QMKP, an evaluation function representing a total profit is given by equation (36).

$$profit(\phi) = \sum_{i=1}^{n}\sum_{j=1}^{n} V_{i,j} 1_{\phi(i)=\phi(j)\neq 0} + \sum_{i=1}^{n} v_i 1_{\phi(i)\neq 0} \qquad (36)$$

In equation (36), $V_{i,j}$ denotes a value that is generated when items with IDs = i and j are placed in the same knapsack, and $v_i$ denotes the value of the item with ID = i itself. In addition, $\varphi(i)$ denotes the ID of a knapsack in which the item with ID = i is placed, and $\varphi(j)$ denotes the ID of a knapsack in which the item with ID = j is placed. In the case where $\varphi(i) = \varphi(j)$, $V_{i,j}$ counts towards the total profit.

The weight limit in the QMKP is represented as an inequality constraint given by equation (37).

$$\sum_{i=1}^{n} w_i 1_{\phi(i)=j} \leq L_j \quad , \quad \forall j = [1, k] \qquad (37)$$

In equation (37), $w_i$ denotes the weight of the item with ID = i, and $L_j$ denotes an upper weight limit for placing items in a knapsack with ID = j among k knapsacks.

In order to map a QMKP problem to a GQAP format, the weight of each item may be mapped to the size of an entity. Since there is no direct method to track items that are not placed in knapsacks, a dummy knapsack is used. When items are placed in this dummy knapsack, their values do not count towards the total profit. In the case where the QMKP problem is mapped to the GQAP format, such a dummy knapsack is added, and therefore the number of destinations m is k+1.

The weight limits of the k knapsacks are mapped directly to the upper capacity limits of the GQAP destinations represented by equation (12). In order to ensure that the weight limit of the dummy knapsack is not violated, the weight limit $L_m$ of the dummy knapsack with ID = m is set to equal the total weight of all items, as given by equation (38).

$$L_m = L_{k+1} = \sum_{i=1}^{n} w_i \qquad (38)$$

The $L_m$ value is concatenated to the end of the vector L containing the weight limits of the k knapsacks, to obtain a vector $L_{KP}$ of the final upper capacity limits of the GQAP destinations, as represented by equation (39).

$$\mathbf{L}_{KP} = \begin{bmatrix} \mathbf{L} & L_m \end{bmatrix} \in \mathbb{R}^m \qquad (39)$$

The value of each item counts towards the total profit when it is placed in a knapsack other than the dummy knapsack. Therefore, a matrix obtained by multiplying a row vector of the values of the items by an m-row column vector where all matrix elements are 1 except for the last matrix element set to 0, as represented by equation (40), may be used as the bias matrix represented by equation (6).

$$\mathbf{B}_{KP} = -\mathbf{v} \times \begin{bmatrix} 1^{1 \times k} & 0 \end{bmatrix}^{\mathbf{T}} \in \mathbb{R}^{n \times m} \qquad (40)$$

The QMKP flow matrix $F_{KP}$ corresponding to the GQAP flow matrix F contains the above-described quadratic values ($V_{i,j}$) as n×n matrix elements, as represented by equation (41) .

$$\mathbf{F}_{KP} = -\mathbf{V} \in \mathbb{R}^{n \times n} \qquad (41)$$

$V_{i,j}$ contributes to the total profit only when both items with IDs = i and j are placed in the same knapsack other than the dummy knapsack. Therefore, the QMKP distance matrix $D_{KP}$ corresponding to the GQAP distance matrix D is represented by equation (42).

$$\mathbf{D}_{KP} = \begin{bmatrix} \mathbf{I}^{k \times k} & \mathbf{0}^{k \times 1} \\ \mathbf{0}^{1 \times k} & 0 \end{bmatrix} = (d_{i,j}) \in \mathbb{R}^{m \times m} \qquad (42)$$

The k×k identity sub-matrix $I^{k \times k}$ sets the distance between different knapsacks to 0 and a distance for the same knapsack to 1. Since the last row and last column of the distance matrix $D_{KP}$ correspond to the dummy knapsack, the distances between the dummy knapsack and the other knapsacks and the distance for the dummy knapsack are all set to 0.

That is, the distance matrix D (= $D_{KP}$) having a pattern illustrated in FIG. 5A is used. When proposing an assignment change of assigning the items with IDs = i and j to the same knapsack (destination), the processing unit 12 generates a value of 1 as a matrix element of the distance matrix D to be used in ΔC calculation. When proposing an assignment change different from the above one, the processing unit 12 generates a value of 0 as a matrix element of the distance matrix D to be used in the ΔC calculation.

In this connection, the ID of the dummy knapsack is not limited to m, but may be set to 0.

Therefore, in the case of finding a solution to the QMKP problem, the distance matrix D does not need to be stored in the storage unit 11.

In various assignment problems other than QMKP, the matrix elements of a flow matrix F or distance matrix D may be patterned by a relatively simple function. In a TSP, a distance matrix D contains the distances between cities as its matrix elements. A flow matrix F may be patterned as an adjacency matrix of a Hamiltonian cycle with N facilities as vertices, and is, for example, represented as illustrated in FIG. 5B. In an LOP, a distance matrix D may be patterned as illustrated in FIG. 5C, where the upper triangle matrix elements have a value of 1 and the lower triangular matrix elements and diagonal elements have a value of 0.

The data processing apparatus 10 of the first embodiment generates matrix elements of a patterned matrix that is either the above-described flow matrix F or distance matrix D and uses them for the ΔC calculation and the local field update. This eliminates the need to store the flow matrix F or distance matrix D in the storage unit 11, thereby reducing memory footprint.

(Second Embodiment)

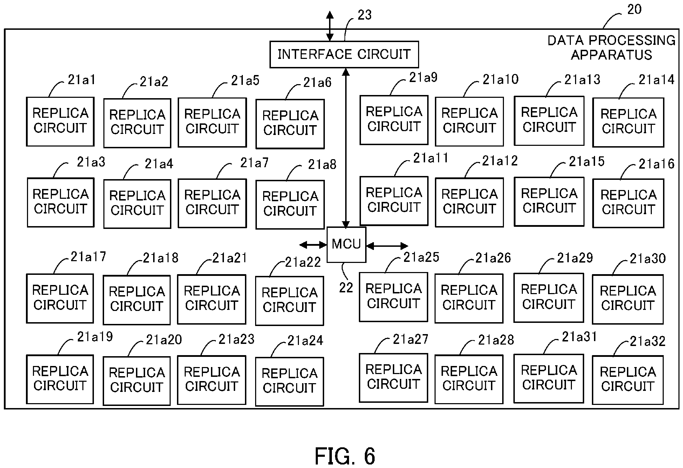

FIG. 6 illustrates an example of a data processing apparatus according to the second embodiment.

The data processing apparatus 20 of the second embodiment finds a solution to an assignment problem using parallel tempering.

The data processing apparatus 20 includes replica circuits 21a1, 21a2, ..., 21a32, a master control unit (MCU) 22, and an interface circuit 23. This data processing apparatus 20 is implemented by using an electronic circuit such as an FPGA, for example.

The replica circuits 21a1 to 21a32 perform local search at different temperature parameter values in parallel in order to search for a solution to an assignment problem. In this connection, the number of replica circuits 21a1 to 21a32 here is just an example and is not limited to 32.

The MCU 22 controls the parallel tempering. The MCU 22 swaps, between replicas with adjacent temperature parameter values ($T_k$ and $T_{k+1}$), the temperature parameter values $T_k$ and $T_{k+1}$ with a swap acceptance probability SAP given by equation (43) on the basis of the values ($C_k$ and $C_{k+1}$) of an evaluation function and the $T_k$ and $T_{k+1}$ values.

$$SAP = min\{1, exp((1/T_k - 1/T_{k+1})(C_k - C_{k+1}))\} \qquad (43)$$

In addition, the MCU 22 sends θ values (see equation (34)) based on the 32 different temperature parameter (T) values, along with control signals, to the replica circuits 21a1 to 21a32. For example, the MCU 22 is able to generate the θ values using a pseudo random number generator such as a permuted congruential generator (PCG). In addition, the MCU 22 performs data communication with a processing device (for example, a host CPU) provided external to the data processing apparatus 20 via the interface circuit 23. For example, the MCU 22 receives and holds problem information, computation conditions, and others in connection with an assignment problem.

For example, the problem information includes a flow matrix F or a distance matrix D, the size of each entity represented by equation (11), the size (n) of the assignment problem, and others.

The computation conditions include initial values of the above-described local fields and unused capacities, initial T values, a target value ($C_{target}$) of the evaluation function, a random number seed to be used by the pseudo random number generator to generate random numbers rand(0, 1) of equation (34), and others.

The MCU 22 writes the flow matrix F or distance matrix D, the size of each entity, and initial values of the local fields and unused capacities in memories, to be described later, provided in the replica circuits 21a1 to 21a32. In addition, the MCU 22 generates an initial value of an assignment state (φ), an initial value of an assignment state ($φ_{min}$) that yields the minimum value ($C_{min}$) of the evaluation function, and others, and supplies them to the replica circuits 21a1 to 21a32. Furthermore, the MCU 22 outputs a finally obtained minimum value $C_{min}$ and its corresponding $φ_{min}$ via the interface circuit 23.

The interface circuit 23 is used for data communication between the MCU 22 and a processing device (for example, a host CPU) provided external to the data processing apparatus 20. As the interface circuit 23, a peripheral component interconnect express (PCIe) or another may be used, for example.

(Example of Replica Circuits)

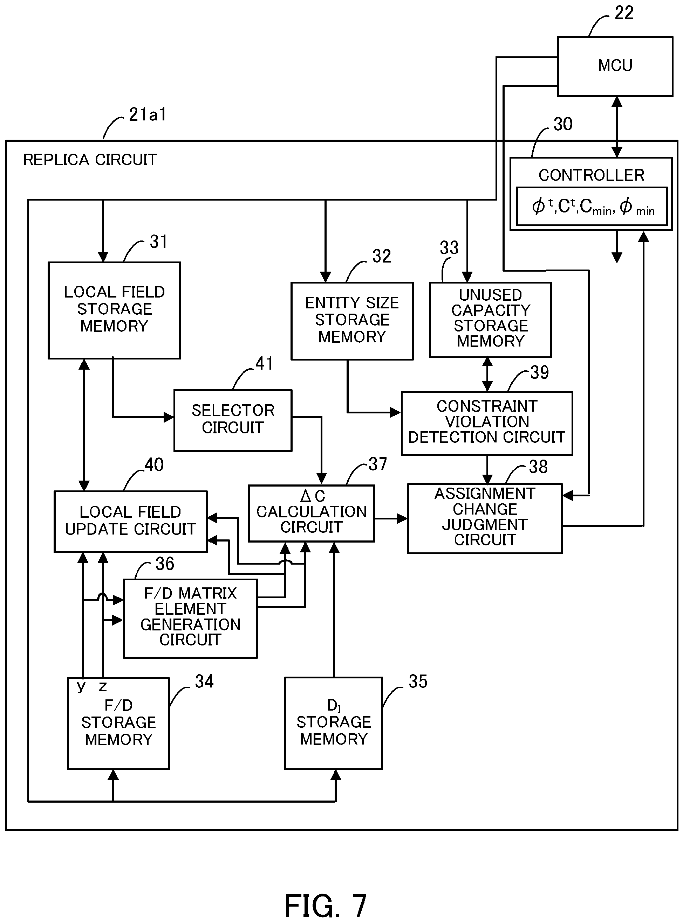

FIG. 7 illustrates an example of replica circuits. FIG. 7 illustrates the replica circuit 21a1 as an example, and the replica circuits 21a2 to 21a32 are implemented with the same configuration.

The replica circuit 21a1 includes a controller 30, a local field storage memory 31, an entity size storage memory 32, an unused capacity storage memory 33, an F/D storage memory 34, and a $D_l$ storage memory 35. In addition, the replica circuit 21a1 includes an F/D matrix element generation circuit 36, a $\Delta C$ calculation circuit 37, an assignment change judgment circuit 38, a constraint violation detection circuit 39, a local field update circuit 40, and a selector circuit 41.

The controller 30 controls the operation of the replica circuit 21a1. In addition, the controller 30 holds the current assignment state ($\varphi^t$), the current value ($C^t$) of the evaluation function, the minimum value ($C_{min}$) of the evaluation function obtained so far, and the assignment state ($\varphi_{min}$) that yields the minimum value. For holding such information, the controller 30 may include a memory (for example, static RAM (SRAM) or the like). Furthermore, the controller 30 selects a first entity and a second entity that are candidates for a destination exchange, updates the assignment state, and performs other processes.

The functions of the above-described controller 12a illustrated in FIG. 4 are implemented by the above-described controller 30 and the MCU 22, for example.

The local field storage memory 31 stores a cache matrix H containing n×m local fields that is represented by equation (22).

The entity size storage memory 32 stores the sizes of entities that are represented by equation (11).

The unused capacity storage memory 33 stores the unused capacities of destinations that are represented by equation (13).

The F/D storage memory 34 stores one of either a flow matrix F or a distance matrix D for an assignment problem having an evaluation function represented by a matrix operation of the flow matrix F and distance matrix D. Note that, in the case of applying a mode that does not generate matrix elements for the other of either the flow matrix F or the distance matrix D, the F/D storage memory 34 may store both the flow matrix F and the distance matrix D.

In the following description, it is assumed that the F/D storage memory 34 is divided into a left-half storage area and a right-half storage area. For example, in the case where the F/D storage memory 34 is able to store the flow matrix F or distance matrix D of 128 rows by 128 columns at maximum, the matrix is stored with the left-half 64 columns and the right-half 64 columns separated. In the case where the matrix has 64 or fewer columns, the right-half storage area does not need to be used. By splitting the row width in half in this manner, it is possible to reduce the amount of circuitry needed to read and process the row data of the flow matrix F or distance matrix D. In this configuration, the use of dual ports allows simultaneous writing and reading for any two half-rows. As a result, within a single clock cycle, it is possible to read a full row at once and also to access matrix elements from any two half-rows. Hereafter, the two ports of the F/D storage memory 34 may be denoted as "y" and "z." In addition, data from the left-half storage area of the F/D storage memory 34 may be denoted as "l," whereas data from the right-half storage area thereof may be denoted as "r."

The $D_l$ storage memory 35 stores the diagonal elements of the distance matrix D for use in $\Delta C$ calculation. The use of this $D_l$ storage memory 35 makes it possible to perform a process of reading or generating $d_{\varphi(a),\varphi(b)}$ and a process of reading $d_{\varphi(a),\varphi(a)}$ and $d_{\varphi(b),\varphi(b)}$ in parallel for calculating the compensation term comp of equation (20), which accelerates the $\Delta C$ calculation.

In the case where the F/D matrix element generation circuit 36 also generates the diagonal elements of the distance matrix D, there is no need to provide the $D_l$ storage memory 35. However, since the $D_l$ storage memory 35 stores the diagonal elements only, there is just a slight increase in memory footprint.

The other memories than the F/D storage memory 34 each may be implemented by using a dual-port SRAM or another. In addition, each memory may have a switch to store data at an appropriate area.

The F/D matrix element generation circuit 36 supplies matrix elements of one of either the flow matrix F or the distance matrix D stored in the F/D storage memory 34 to the $\Delta C$ calculation circuit 37 and local field update circuit 40 under the control of the controller 30. In addition, the F/D matrix element generation circuit 36 generates matrix elements for the other of either the flow matrix F or the distance matrix D that is not stored in the F/D storage memory 34 under the control of the controller 30, and then supplies the generated matrix elements to the $\Delta C$ calculation circuit 37 and local field update circuit 40.

The $\Delta C$ calculation circuit 37 calculates $\Delta C$ for a destination exchange or relocation.

The constraint violation detection circuit 39 reads the sizes of the first entity and second entity from the entity size storage memory 32 and the unused capacities of their destinations from the unused capacity storage memory 33. Then, the constraint violation detection circuit 39 detects whether the destination exchange between the first entity and the second entity results in a constraint of over-capacity being violated. In addition, the constraint violation detection circuit 39 may update the unused capacities of the destinations of the first entity and second entity after the destination exchange.

The assignment change judgment circuit 38 inputs $\Delta C$ and $\theta$ obtained from equation (34) to equation (35) to determine whether to allow the assignment change. In this connection, if the constraint violation detection circuit 39 detects a constraint violation, the assignment change is not allowed.

When the assignment change is allowed, the local field update circuit 40 updates the cache matrix H containing n×m local fields via equation (27) or equation (28).

The selector circuit 41 selects local fields that the $\Delta C$ calculation circuit 37 uses to calculate $\Delta C$ with equation (23)

or equation (24), and supplies the selected local fields to the $\Delta$C calculation circuit 37.

(Example of F/D Matrix Element Generation Circuit 36)

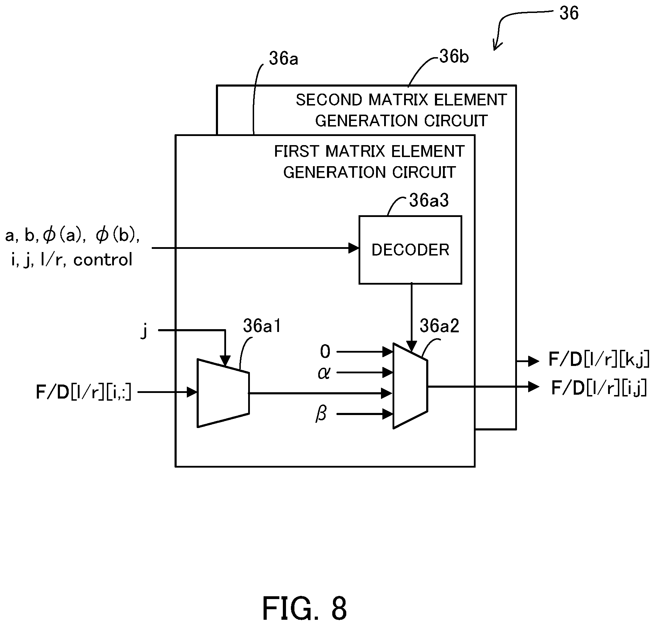

FIG. 8 illustrates an example of an F/D matrix element generation circuit.

The F/D matrix element generation circuit 36 includes a first matrix element generation circuit 36a and a second matrix element generation circuit 36b.

The first matrix element generation circuit 36a includes selector circuits 36a1 and 36a2 and a decoder 36a3.

The selector circuit 36a1 selects and outputs the j-th column matrix element among the i-th row matrix elements of the flow matrix F or distance matrix D read from the left-half or right-half storage area of the F/D storage memory 34. Here, "j" is specified by the controller 30.

The selector circuit 36a2 selects and outputs any one of 0, $\alpha$, $\beta$, and the output of the selector circuit 36a1 according to a select signal generated by the decoder 36a3. For example, $\alpha = 1$, and $\beta = -1$. The matrix element output from the selector circuit 36a2 is represented as F/D[1/r][i,j].

The decoder 36a3 receives, from the controller 30, the IDs a and b of the first entity and second entity that are candidates for an exchange and the IDs $\varphi(a)$ and $\varphi(b)$ of their destinations. The decoder 36a3 also receives, from the controller 30, a row number i and a column number j read from the flow matrix F or distance matrix D, information 1/r indicating one of the left-half and right-half storage areas of the F/D storage memory 34, and a control signal control.

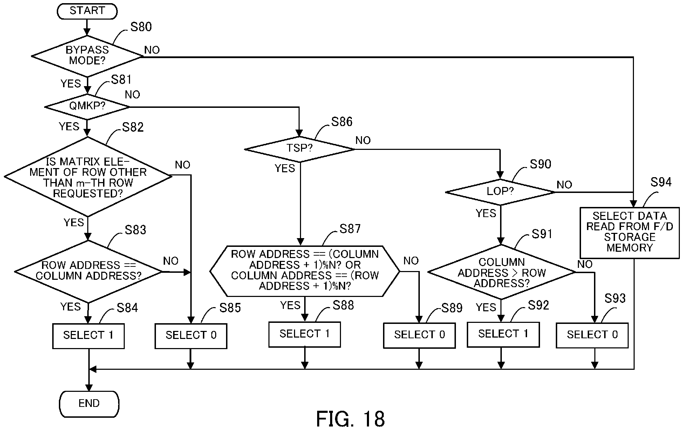

Then, the decoder 36a3 generates a select signal for the selector circuit 36a2 on the basis of the received information and signal. In the case where the decoder 36a3 causes the selector circuit 36a2 to output a matrix element of one of either the flow matrix F or the distance matrix D stored in the F/D storage memory 34, the decoder 36a3 generates a select signal that causes the selector circuit 36a2 to select the output of the selector circuit 36a1. In the case of generating a matrix element for the other of either the flow matrix F or the distance matrix D that is not stored in the F/D storage memory 34, the decoder 36a3 generates a select signal that causes the selector circuit 36a2 to select any value of 0, $\alpha$, and $\beta$. A specific process of generating matrix elements depending on an assignment problem will be described later (see FIG. 18).

The second matrix element generation circuit 36b is implemented with the same configuration as the first matrix element generation circuit 36a, although this is not illustrated. Note, however, that the second matrix element generation circuit 36b uses k instead of i. Therefore, a matrix element output from the second matrix element generation circuit 36b is represented as F/D[l/r][k,j].

In the case where the first matrix element generation circuit 36a outputs $f_{a,b}$ of equation (20) on the basis of matrix elements read from the port y of the F/D storage memory 34, the second matrix element generation circuit 36b generates $d_{\varphi(a),\varphi(b)}$. In the case where the first matrix element generation circuit 36a generates $d_{\varphi(a),\varphi(b)}$, the second matrix element generation circuit 36b may output $f_{a,b}$ of equation (20) on the basis of matrix elements read from the port z of the F/D storage memory 34.

The F/D matrix element generation circuit 12b1 illustrated in FIG. 4 as well is implemented with the circuit configuration illustrated in FIG. 8.

(Example of $\Delta$C Calculation Circuit 37)

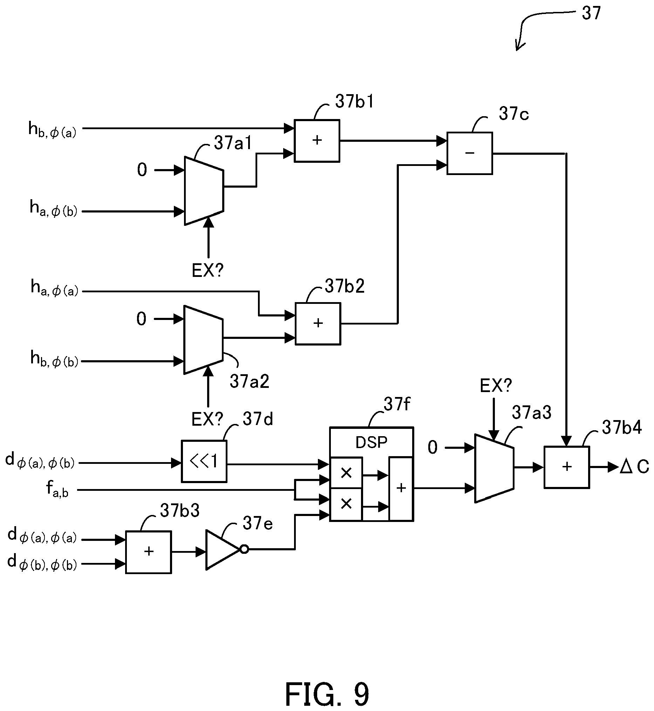

FIG. 9 illustrates an example of a $\Delta$C calculation circuit.

The $\Delta$C calculation circuit 37 includes selector circuits 37a1, 37a2, and 37a3, adder circuits 37b1, 37b2, 37b3, and 37b4, a subtractor circuit 37c, a one-bit left shift circuit 37d, an inverter circuit 37e, and a DSP 37f.

The selector circuit 37a1 selects and outputs either $h_{a,\varphi(b)}$ read from the local field storage memory 31 and then selected by the selector circuit 41 or 0 depending on an "EX?" flag value. The "EX?" flag is set to 1 if $\Delta$C is calculated for an assignment change of exchange between the first entity and the second entity, and is set to 0 if $\Delta$C is calculated for an assignment change of relocation.

The selector circuit 37a1 selects and outputs $h_{a,\varphi(b)}$ if the "EX?" flag has a value of 1, and selects and outputs 0 if the "EX?" flag has a value of 0.

The selector circuit 37a2 selects and outputs either $h_{b,\varphi(b)}$ read from the local field storage memory 31 and then selected by the selector circuit 41 or 0 depending on the "EX?" flag value. The selector circuit 37a2 selects and outputs $h_{b,\varphi(b)}$ if the "EX?" flag has a value of 1, and selects and outputs 0 if the "EX?" flag has a value of 0.

The adder circuit 37b1 outputs an addition result of adding $h_{b,\varphi(a)}$ read from the local field storage memory 31 and then selected by the selector circuit 41 and the output of the selector circuit 37a1.

The adder circuit 37b2 outputs an addition result of adding $h_{a,\varphi(a)}$ read from the local field storage memory 31 and then selected by the selector circuit 41 and the output of the selector circuit 37a2.

The subtractor circuit 37c outputs a subtraction result of subtracting the addition result output from the adder circuit 37b2 from the addition result output from the adder circuit 37b1.

The one-bit left shift circuit 37d outputs a result obtained by left-shifting $d_{\varphi(a),\varphi(b)}$ generated or output by the F/D matrix element generation circuit 36 by one bit. This result corresponds to $2d_{\varphi(a),\varphi(b)}$.

The adder circuit 37b3 outputs an addition result of $d_{\varphi(a),\varphi(a)}$ and $d_{\varphi(b),\varphi(b)}$ read from the $D_I$ storage memory 35.

The inverter circuit 37e outputs a value obtained by inverting the sign of the addition result of $d_{\varphi(a),\varphi(a)}$ and $d_{\varphi(b),\varphi(b)}$.

The DSP 37f multiplies the output ($2d_{\varphi(a),\varphi(b)}$) of the one-bit left shift circuit 37d with $f_{a,b}$ generated or output by the F/D matrix element generation circuit 36 and multiplies the output of the inverter circuit 37e with $f_{a,b}$. Then, the DSP 37f outputs the sum ($f_{a,b}(2d_{\varphi(a),\varphi(b)} - d_{\varphi(a),\varphi(a)} - d_{\varphi(b),\varphi(b)})$) of these multiplication results.

The selector circuit 37a3 selects and outputs either the operation result obtained by the DSP 37f or 0 depending on the "EX?" flag value. The selector circuit 37a3 selects and outputs the operation result obtained by the DSP 37f if the "EX?" flag has a value of 1, and selects and outputs 0 if the "EX?" flag has a value of 0.

The adder circuit 37b4 outputs $\Delta C$ that is an addition result of adding the subtraction result output from the subtractor circuit 37c and the output of the selector circuit 37a3.

The $\Delta C$ calculation circuit 12b2 illustrated in FIG. 4 as well is implemented with the circuit configuration illustrated in FIG. 9.

(Example of Assignment Change Judgment Circuit 38)

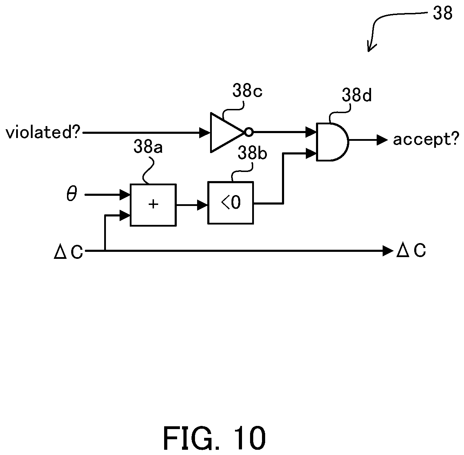

FIG. 10 illustrates an example of an assignment change judgment circuit.

The assignment change judgment circuit 38 includes an adder circuit 38a, a comparison circuit 38b, an inverter circuit 38c, and an AND (logical product) circuit 38d.

The adder circuit 38a outputs an addition result of adding $\theta$ supplied from the MCU 22 and $\Delta C$ calculated by the $\Delta C$ calculation circuit 37.

The comparison circuit 38b outputs 1 if the addition result output from the adder circuit 38a is less than 0, and outputs 0 if the addition result output from the adder circuit 38a is 0 or greater.

The inverter circuit 38c flips a "violated?" flag value of 1 or 0, which is output from the constraint violation detection circuit 39, to 0 or 1. The "violated?" flag has a value of 1 if a constraint is violated, whereas the "violated?" flag has a value of 0 if no constraint is violated.

The AND circuit 38d performs a logical product of the output of the inverter circuit 38c and the comparison result of the comparison circuit 38b, and outputs the result as the value of an "accept?" flag. The "accept?" flag of "1" indicates that the assignment change is allowed, whereas the "accept?" flag of "0" indicates that the assignment change is not allowed.

In this connection, $\Delta C$ input to the assignment change judgment circuit 38 is output as it is and is supplied to the controller 30.

The assignment change judgment circuit 12b4 illustrated in FIG. 4 as well is implemented with the circuit configuration illustrated in FIG. 10.

(Example of Constraint Violation Detection Circuit 39)

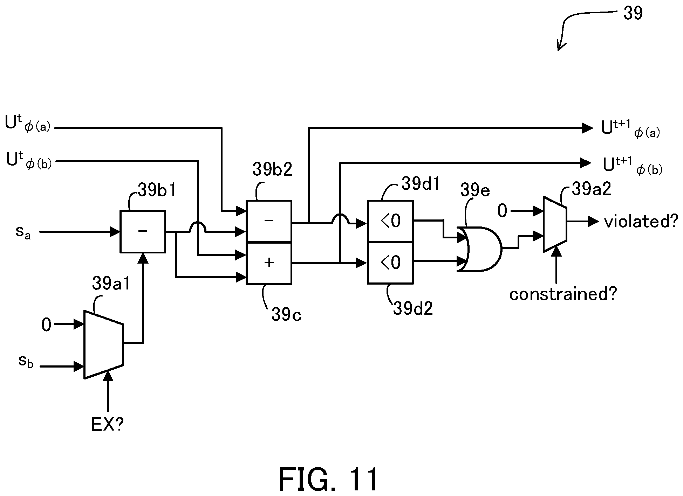

FIG. 11 is an example of a constraint violation detection circuit.

The constraint violation detection circuit 39 includes selector circuits 39a1 and 39a2, subtractor circuits 39b1 and 39b2, an adder circuit 39c, comparison circuits 39d1 and 39d2, an OR (logical sum) circuit 39e.

The selector circuit 39a1 selects and outputs either $s_b$ (the size of the entity with ID = b) read from the entity size storage memory 32 or 0 depending on the "EX?" flag value. The selector circuit 39a1 outputs $s_b$ if the "EX?" flag has a value of "1", and outputs 0 if the "EX?" flag has a value of "0."

The subtractor circuit 39b1 outputs a subtraction result of subtracting the output of the selector circuit 39a1 from $s_a$ (the size of the entity with ID = a) read from the entity size storage memory 32.

The subtractor circuit 39b2 outputs a subtraction result of subtracting the subtraction result obtained by the subtractor circuit 39b1 from the current unused capacity $U^t_{\varphi(a)}$ of the destination $\varphi(a)$ read from the unused capacity storage memory 33. This subtraction result is the updated unused capacity $U^{t+1}_{\varphi(a)}$ of the destination $\varphi(a)$.

The adder circuit 39c outputs an addition result of adding the subtraction result obtained by the subtractor circuit 39b1 to the current unused capacity $U^t_{\varphi(b)}$ of the destination $\varphi(b)$ read from the unused capacity storage memory 33. This addition result is the updated unused capacity $U^{t+1}_{\varphi(b)}$ of the destination $\varphi(b)$.

The comparison circuit 39d1 outputs 1 if the subtraction result output from the subtractor circuit 39b2 is less than 0, and outputs 0 if the subtraction result is 0 or greater.

The comparison circuit 39d2 outputs 1 if the addition result output from the adder circuit 39c is less than 0, and outputs 0 if the addition result is 0 or greater.

The OR circuit 39e performs a logical sum of the comparison results obtained by the comparison circuits 39d1 and 39d2, and outputs the result.

The selector circuit 39a2 selects and outputs either the output of the OR circuit 39e or 0 depending on a "constrained?" flag value of 1 or 0. The "constrained?" flag of 1 indicates that each destination in the assignment problem being solved has a capacity limit. As the "violated?" flag value, the selector circuit 39a2 selects and outputs the output of the OR circuit 39e if the "constrained?" flag has a value of 1, and selects and outputs 0 if the "constrained?" flag has a value of 0.

In addition, the constraint violation detection circuit 39 also outputs the calculated $U^{t+1}_{\varphi(a)}$ and $U^{t+1}_{\varphi(b)}$.

The constraint violation detection circuit 12b3 illustrated in FIG. 4 as well is implemented with the circuit configuration illustrated in FIG. 11.

(Example of Local Field Update Circuit 40)

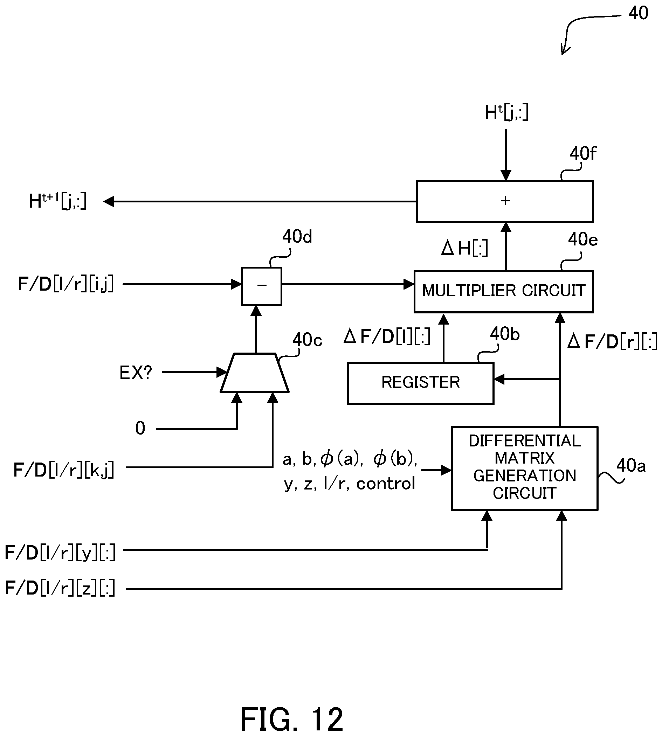

FIG. 12 illustrates an example of a local field update circuit.

The local field update circuit 40 includes a differential matrix generation circuit 40a, a register 40b, a selector circuit 40c, a subtractor circuit 40d, a multiplier circuit 40e, and an adder circuit 40f.

The differential matrix generation circuit 40a generates ΔF or ΔD to be used for updating the cache matrix H.

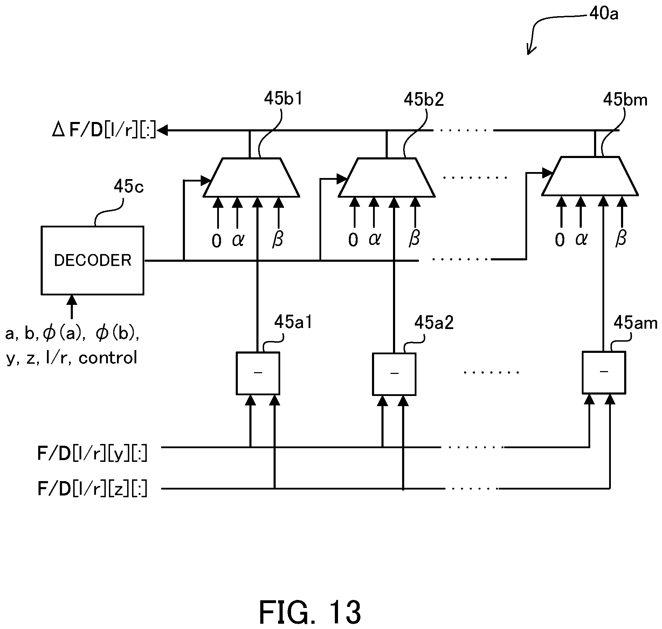

FIG. 13 illustrates an example of a differential matrix generation circuit.

The differential matrix generation circuit 40a includes subtractor circuits 45a1, 45a2, ..., 45am, selector circuits 45b1, 45b2, ..., 45bm, and a decoder 45c. m denotes the number of columns in a matrix each of the left-half and right-half storage areas of the F/D storage memory 34 is able to store.

The subtractor circuits 45a1 to 45am receive F/D[l/r][y][:] and F/D[l/r][z][:]. F/D[l/r][y][:] indicates matrix elements that have been read via the port y among the matrix elements of the flow matrix F or distance matrix D stored in the left-half or right-half storage area of the F/D storage memory 34. F/D[l/r][z][:] indicates matrix elements that have been read via the port z among the matrix elements of the flow matrix F or distance matrix D stored in the left-half or right-half storage area of the F/D storage memory 34.

The subtractor circuits 45a1 to 45am perform the differential calculation of equation (25) or equation (26) on the basis of the received matrix elements in parallel with respect to m pairs of matrix elements at maximum.

The selector circuits 45b1, 45b2, ..., 45bm each select and output any of 0, α, β, and the output of the corresponding one of the subtractor circuits 45a1 to 45am according to a select signal generated by the decoder 45c. For example, α = 1, and β = -1.

The decoder 45c receives, from the controller 30, the IDs a and b of the first entity and second entity that are candidates for an exchange, the IDs φ(a) and φ(b) of their destinations, and a control signal control. In addition, the decoder 45c receives, from the controller 30, information y, z indicating one of the ports y and z of the F/D storage memory 34 via which matrix elements have been read. Furthermore, the decoder 45c receives, from the controller 30, information l/r indicating one of the left-half and right-half storage areas of the F/D storage memory 34 from which the matrix elements have been output.

The decoder 45c then generates select signals for the selector circuits 45b1 to 45bm on the basis of the received information and signal. In the case where the decoder 45c causes the selector circuits 45b1 to 45bm to output the differential calculation results based on the matrix elements stored in the F/D storage memory 34, the decoder 45c causes the selector circuits 45b1 to 45bm to select the outputs of the subtractor circuits 45a1 to 45am. In the case where the decoder 45c causes the selector circuits 45b1 to 45bm to output the differential calculation results based on matrix elements that are not stored in the F/D storage memory 34, the decoder 45c causes the selector circuits 45b1 to 45bm to select any value of 0, α, and β.

The register 40b illustrated in FIG. 12 holds ΔF/D[l][:] that is ΔF or ΔD generated based on the matrix elements stored in the left-half storage area of the F/D storage memory 34.

The selector circuit 40c selects and outputs either F/D[l/r][k,j] output from the F/D matrix element generation circuit 36 or 0 depending on the "EX?" flag value. The selector circuit 40c selects and outputs F/D[l/r][k,j] if the "EX?" flag has a value of 1, and selects and outputs 0 if the "EX?" flag has a value of 0.

The subtractor circuit 40d outputs a subtraction result of subtracting the output of the selector circuit 40c from F/D[l/r][i,j] output from the F/D matrix element generation circuit 36.

The multiplier circuit 40e obtains, from the differential matrix generation circuit 40a, ΔF/D[r][:] that is ΔF or ΔD generated based on the matrix elements stored in the right-half storage area of the F/D storage memory 34. The multiplier circuit 40e then concatenates ΔF/D[r][:] and ΔF/D[l][:] stored in the register 40b together to thereby obtain ΔF or ΔD. The multiplier circuit 40e then multiplies the subtraction result obtained by the subtractor circuit 40d with each matrix element of ΔF or ΔD to thereby obtain ΔH[:].

The adder circuit 40f adds ΔH[:] to the current cache matrix $H^t$[j,:] and outputs the updated cache matrix $H^{t+1}$[j,:].

The local field update circuit 12b5 illustrated in FIG. 4 as well is implemented with the circuit configuration illustrated in FIG. 12.

(Example of Processing Procedure of Data Processing Apparatus 20)

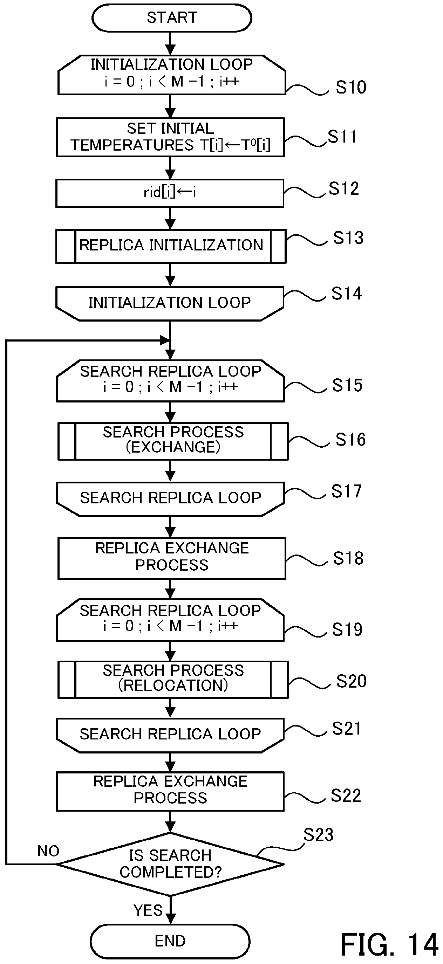

FIG. 14 is a flowchart illustrating an example of processing procedure of a data processing apparatus according to the second embodiment. FIG. 14 illustrates the entire processing flow of local search using parallel tempering under the control of the MCU 22.

First, an initialization loop (steps S10 to S14) is run while incrementing i one by one from i = 0 to i < M - 1, where M denotes the number of replicas. In the case of the data processing apparatus 20 illustrated in FIG. 6, M is 32.

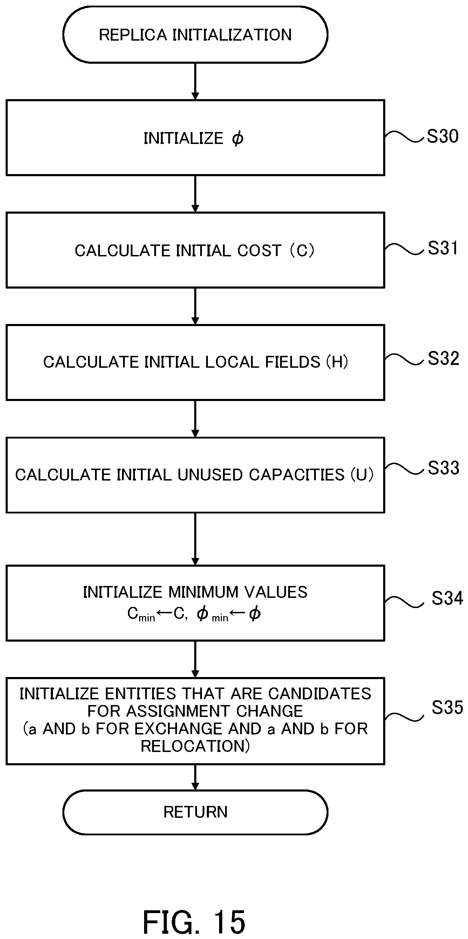

The initialization loop sets an initial temperature (temperature ladder) for each replica (T[i] ← T°[i]) (step S11). Then, the MCU 22 generates θ values based on the different initial temperatures and supplies the θ values to the replica circuits 21a1 to 21a32, respectively. In addition, the initialization loop sets an ID for each replica (rid[i] ← i) (step S12). Then, a replica initialization process, which will be described later (see FIG. 15), is performed (step S13).

Then, a search replica loop (steps S15 to S17) is run while incrementing i one by one from i = 0 to i < M - 1.

The search replica loop performs a search process of finding a solution to the assignment problem by making assignment changes of destination exchange between entities (step S16). In this search process, each replica circuit 21a1 to 21a32 repeats local search using the set θ value a predetermined number of iterations.

After that, the MCU 22 performs a replica exchange process via equation (43) (step S18). In step S18, the MCU 22 further updates the θ values on the basis of the changed temperature parameter values and supplies the updated θ values to the replica circuits 21a1 to 21a32, respectively.

Then, a search replica loop (steps S19 to S21) is run again while incrementing i one by one from i = 0 to i < M-1.

This search replica loop performs a search process of finding a solution to the assignment problem by making assignment changes of relocation as described earlier (step S20). In this search process, each replica circuit 21a1 to 21a32 repeats local search using the set θ value a predetermined number of iterations.

After that, the MCU 22 performs a replica exchange process via equation (43) (step S22). In step S22, the MCU 22 further updates the θ values on the basis of the changed temperature parameter values and supplies the updated θ values to the replica circuits 21a1 to 21a32, respectively.

Then, the MCU 22 determines whether to complete the search (step S23). For example, when a preset best known solution (BKS) cost ($C_{BKS}$) or $C_{target}$ is found or a time-out limit is reached, it is determined to complete the search, and then the search is completed. If it is determined not to complete the search, the process is repeated from step S15.

In this connection, the data processing apparatus 20 may be designed to output, when the search is completed, the search result (for example, the minimum value $C_{min}$ obtained so far and its corresponding $\varphi_{min}$) via the interface circuit 23. The search result may be displayed on a display device connected to the data processing apparatus 20, for example.

FIG. 14 illustrates an example in which the initialization loop and search replica loops are run for the replicas in order. However, for example, 32 replica circuits 21a1 to 21a32 may be used to run the loops in parallel.

The following describes an example of the replica initialization process of step S13.

FIG. 15 is a flowchart illustrating an example of a replica initialization process.

The MCU 22 first initializes an integer assignment vector φ (step S30). In step S30, the MCU 22 randomly determines destinations (knapsacks in QMKP) for entities, for example.

Then, the MCU 22 calculates an initial cost (C) from equation (1) (step S31). The initial cost is stored in the memories provided in the individual controllers 30 of the replica circuits 21a1 to 21a32.

In addition, the MCU 22 calculates initial values (initial local fields) of local fields contained in the cache matrix H represented by equation (22) (step S32). The initial local fields are stored in the individual local field storage memories 31 of the replica circuits 21a1 to 21a32.

In addition, the MCU 22 calculates initial values (initial unused capacities) of unused capacities (U) represented by equation (13) (step S33). The initial unused capacities are stored in the individual unused capacity storage memories 33 of the replica circuits 21a1 to 21a32.

In addition, the MCU 22 initializes the minimum values ($C_{min}$ and $\varphi_{min}$) using the initialized φ and C (step S34). The $C_{min}$ and $\varphi_{min}$ values are stored in the memories provided in the individual controllers 30 of the replica circuits 21a1 to 21a32.

In addition, the MCU 22 initializes entities that are candidates for an assignment change (step S35). In step S35, the IDs a and b (a and b for an exchange) of the candidates for an assignment change of destination exchange are initialized. In addition, in step S35, the IDs a and b (a and b for a relocation) of the candidates for an assignment change of relocation are initialized. The initialized IDs of these candidates are set in the individual controllers 30 of the replica circuits 21a1 to 21a32.

In this connection, the MCU 22 also stores the flow matrix F or distance matrix D, and the sizes of entities in memories (F/D storage memory 34, $D_l$ storage memory 35, and entity size storage memory 32) of the replica circuits 21a1 to 21a32.

After that, the process is back to the flowchart of FIG. 14.

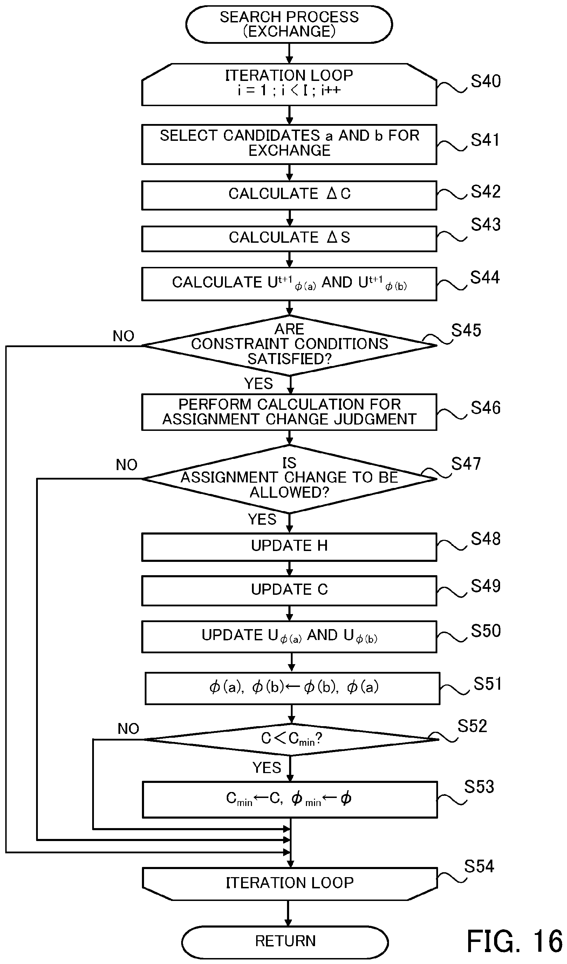

FIG. 16 is a flowchart illustrating an example of a search process (exchange).

In the search process (exchange), an iteration loop (steps S40 to S54) is run while incrementing i one by one from i = 1 to i < I.

First, the controller 30 selects two entities (identified by IDs = a and b) as candidates for a destination exchange (step S41).

The $\Delta C$ calculation circuit 37 calculates $\Delta C$ resulting from the destination exchange between the selected two entities (step S42). The $\Delta C$ value for the destination exchange between the two entities is given by equation (23).

The constraint violation detection circuit 39 calculates $\Delta S$ resulting from the destination exchange (step S43). The $\Delta S$ value for the destination exchange is given by equation (29). In addition, the constraint violation detection circuit 39 calculates $U^{t+1}_{\varphi(a)}$ and $U^{t+1}_{\varphi(b)}$ (step S44). $U^{t+1}_{\varphi(a)}$ and $U^{t+1}_{\varphi(b)}$ are given by equations (31) and (32) .

The constraint violation detection circuit 39 determines whether the constraint conditions are satisfied (step S45). Whether the constraint conditions are satisfied is determined as given in equation (33). If it is determined that the constraint conditions are satisfied, step S46 is executed.

In step S46, the assignment change judgment circuit 38 performs calculation for the assignment change judgment. The assignment change judgment circuit 38 then determines whether to allow the assignment change (step S47). If it is determined to allow the assignment change, step S48 is executed.

In step S48, the local field update circuit 40 updates the cache matrix H. For the destination exchange between the two entities, the cache matrix H is updated using equation (27).

In addition, the controller 30 updates the value of the evaluation function (step S49). The value of the evaluation function is updated by adding $\Delta C$ to the original value (C) of the evaluation value. In addition, the constraint violation detection circuit 39 updates $U_{\varphi(a)}$ and $U_{\varphi(b)}$ with $U^{t+1}_{\varphi(a)}$ and $U^{t+1}_{\varphi(b)}$ calculated in step S44 (step S50). In addition, the controller 30 updates the assignment state for the destination exchange ($\varphi(a)$, $\varphi(b) \leftarrow \varphi(b)$, $\varphi(a)$) (step S51).

After that, the controller 30 determines whether $C < C_{min}$ is satisfied (step S52). If $C < C_{min}$ is obtained, the controller 30 updates the minimum values ($C_{min} \leftarrow C$, $\varphi_{min} \leftarrow \varphi$) (step S53).

After step S53 is executed, the process is repeated from step S41 until i reaches I. The same applies if it is determined in step S45 that the constraint conditions are not satisfied, if it is determined in step S47 that the assignment change is not allowed, or if $C < C_{min}$ is not obtained in step S52. When i = I, the process proceeds back to the flowchart of FIG. 14.

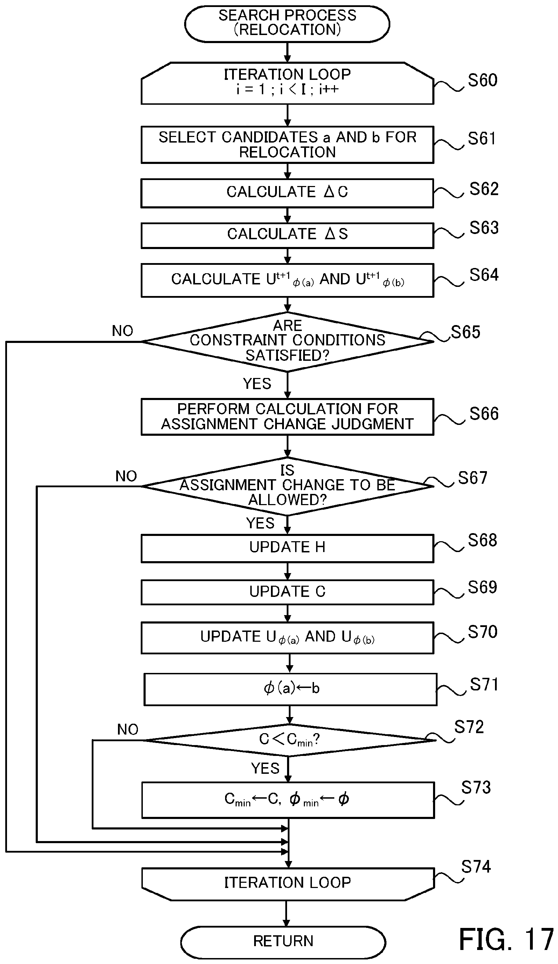

FIG. 17 is a flowchart illustrating an example of a search process (relocation).

In the search process (relocation) as well, an iteration loop (steps S60 to S74) is run while incrementing i one by one from i = 1 to i < I.

The controller 30 first selects two entities (identified by IDs = a and b) that are candidates for a relocation (step S61).

The $\Delta C$ calculation circuit 37 calculates $\Delta C$ resulting from the relocation (reassignment) of the entity with ID = b to $\varphi$ (a) (step S62) . The $\Delta C$ value for the relocation of the entity with ID = b to $\varphi(a)$ is given by equation (24).

The constraint violation detection circuit 39 calculates $\Delta S$ resulting from the relocation (step S63). The $\Delta S$ value for the relocation is given by equation (30). Steps S64 to S67 are executed in the same manner as steps S44 to S47 of FIG. 16.

In step S68, the local field update circuit 40 updates the cache matrix H. For the relocation, the cache matrix H is updated using equation (28). Steps S69 and S70 are executed in the same manner as steps S49 and S50 of FIG. 16.

The controller 30 updates the assignment state for the relocation ($\varphi(a) \leftarrow b$) (step S71). Steps S72 and S73 are executed in the same manner as steps S52 and S53 of FIG. 16.

After step S73 is executed, the process is repeated from step S61 until i reaches I. The same applies if it is determined in step S65 that the constraint conditions are not satisfied, if it is determined in step S67 that the assignment change is not allowed, or if $C < C_{min}$ is not obtained in step S72. When i = I, the process proceeds back to the flowchart of FIG. 14.

FIG. 18 is a flowchart illustrating an example of an F/D matrix element generation process.

The decoder 36a3 of the F/D matrix element generation circuit 36 illustrated in FIG. 8 determines based on a control signal control received from the controller 30 whether a bypass mode is in use (step S80). The decoder 36a3 executes step S81 if the bypass mode is in use, and executes step S94 if the bypass mode is not in use.

In step S81, the decoder 36a3 determines based on the control signal control whether the type of the assignment problem is a QMKP. The decoder 36a3 executes step S82 if the problem type is a QMKP, and executes step S86 if the problem type is not a QMKP.

In step S82, the decoder 36a3 determines based on the received $\varphi(a)$ and cp (b) whether a matrix element of a row other than the m-th row of a distance matrix D is requested. m denotes the ID of the dummy knapsack and is obtained as m = k + 1 (k denotes the number of knapsacks) . If $\varphi(a) = m$ or $\varphi(b) = m$, the decoder 36a3 determines that a matrix element of the m-th row of the distance matrix D is requested. In this connection, the distance matrix D for the QMKP is represented as illustrated in FIG. 5A, for example.

The decoder 36a3 executes step S83 if a matrix element of a row other than the m-th row of the distance matrix D is requested, and executes step S85 if a matrix element of the m-th row is requested.

In step S83, the decoder 36a3 determines based on the received $\varphi(a)$ and $\varphi(b)$ whether the row address and column address of the requested matrix element are the same. The decoder 36a3 determines that the row address is the same as the column address if $\varphi(a)$ is equal to $\varphi(b)$.

The decoder 36a3 executes step S84 if the row address is the same as the column address. Otherwise, the decoder 36a3 executes step S85.

In step S84, the decoder 36a3 causes the selector circuit 36a2 to select and output 1. In step S85, the decoder 36a3 causes the selector circuit 36a2 to select and output 0.

In step S86, the decoder 36a3 determines based on the control signal control whether the type of the assignment problem is a TSP. The decoder 36a3 executes step S87 if the problem type is a TSP, and executes step S90 if the problem type is not a TSP.

In step S87, the decoder 36a3 obtains, from the controller 30, the row address and column address of a requested matrix element of a flow matrix F. In the case of an m-by-m matrix, the row address and column address are specified in the range of 0 to m-1. The decoder 36a3 determines whether the remainder obtained by dividing "column address + 1" by N (= the number of facilities) is equal to the row address or whether the remainder obtained by dividing the "row address + 1" by N is equal to the column address. In this connection, the flow matrix F for the TSP is represented as illustrated in FIG. 5B, for example.

The decoder 36a3 executes step S88 if the remainder obtained by dividing "column address + 1" by N is equal to the row address or if the remainder obtained by dividing the "row address + 1" by N is equal to the column address. Otherwise, the decoder 36a3 executes step S89.

In step S88, the decoder 36a3 causes the selector circuit 36a2 to select and output 1. In step S89, the decoder 36a3 causes the selector circuit 36a2 to select and output 0.

In step S90, the decoder 36a3 determines on the basis of the control signal control whether the type of the assignment problem is an LOP. The decoder 36a3 executes step S91 if the problem type is an LOP, and executes step S94 if the problem type is not an LOP.

In step S91, the decoder 36a3 determines based on the received $\varphi(a)$ and $\varphi(b)$ whether the column address of a requested matrix element of a distance matrix D is greater than the row address thereof. In this connection, the distance matrix D for the LOP is represented as illustrated in FIG. 5C, for example.

The decoder 36a3 executes step S92 if the column address is greater than the row address. Otherwise, the decoder 36a3 executes step S93.

In step S92, the decoder 36a3 causes the selector circuit 36a2 to select and output 1. In step S93, the decoder 36a3 causes the selector circuit 36a2 to select and output 0.

In step S94, the decoder 36a3 causes the selector circuit 36a2, not to generate a matrix element, but to select and output data (matrix element) read from the F/D storage memory 34.

After step S84, S85, S88, S89, S92, S93, or S94 is executed, the processing by the decoder 36a3 is completed.

The process of FIG. 18 may be modified so that the decoder 45c included in the differential matrix generation circuit 40a of the local field update circuit 40 illustrated in FIG. 13 is able to generate a difference between matrix elements.

The above description relates to examples in which matrix elements are generated for a QMKP, TSP, and LOP. However, the types of applicable assignment problems are not limited to these.

The order of steps illustrated in each of FIGS. 14 to 18 is just an example, and may be changed where appropriate.

For example, in FIG. 16, step S42 of calculating $\Delta C$ may be executed between step S45 and step S46. In this case, the $\Delta C$ calculation is skipped if it is determined that the constraint conditions are not satisfied. The $\Delta C$ calculation is not needed if the constraint conditions are not satisfied. To skip the $\Delta C$ calculation, which has a high computational load, leads to reducing the processing time. Similarly, in FIG. 17, step S62 of calculating $\Delta C$ may be executed between step S65 and step S66.

As described above, the data processing apparatus 20 of the second embodiment generates matrix elements for a patterned matrix out of the above-described flow matrix F and distance matrix D and uses them for calculating $\Delta C$ and updating local fields. This eliminates the need to store the flow matrix F or distance matrix F in the F/D storage memory 34, thereby reducing memory footprint.

For example, in the case of a 128-by-128 distance matrix D whose matrix elements each have a data amount of 4 bytes, the data amount of the distance matrix D is calculated to be $4 \times 128^2 = 64$ KB. In the case of using 32 replicas, the memory footprint may be reduced by a total of 2 MB (= 64 KB $\times$ 32).

Since the memory footprint for storing the distance matrix D or flow matrix F is reduced as described above, it is possible to address larger-scale problems with the same memory size.

(Third Embodiment)

The data processing apparatuses 10 and 20 of the first and second embodiments include the local field storage memories 11b and 31 for calculating ΔC using local fields. In order to further reduce memory footprint, it may be so designed as to calculate ΔC without using local fields.

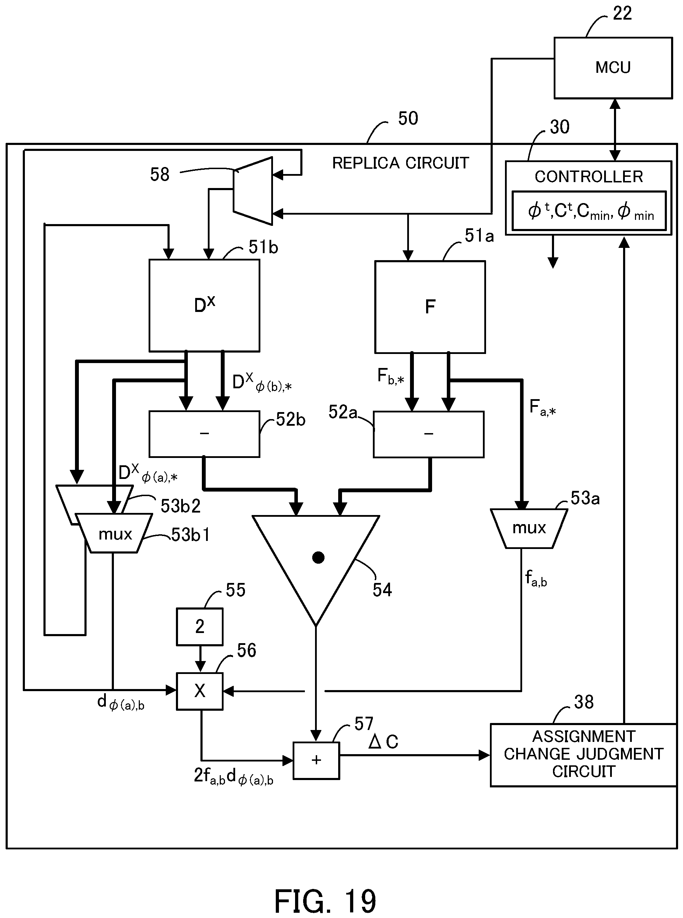

FIG. 19 illustrates an example of replica circuits in a data processing apparatus according to a third embodiment. In this connection, in FIG. 19, the illustration of components used for a process involving constraint conditions, such as the entity size storage memory 32 and unused capacity storage memory 33, is omitted.

In this connection, to simplify the description, it is now assumed that both a flow matrix and a distance matrix are symmetric matrices (with the diagonal elements being 0 (bias-less)). This is because such QAPs make up the majority of instances and also the mathematical calculations are simplified. Note that a QAP with symmetric matrices is directly transferable to a QAP with asymmetric matrices.

An evaluation function for the QAP only using symmetric matrices is given by equation (44).

$$C(\phi) = \sum_{i=1}^{n} \sum_{j=i}^{n} f_{i,j} d_{\phi(i),\phi(j)} \qquad (44)$$

In the case of using the evaluation function given by equation (44), ΔC, which is calculated in the QAP, is given by equations (45) and (46).

$$\Delta C = \sum_{i=1}^{n} (d_{\phi(a),i} - d_{\phi(b),i}) \times (f_{b,i} - f_{a,i}) \qquad (45)$$
$$+ 2 f_{a,b} d_{\phi(a),b}$$

$$\Delta C = \Delta_{\phi(b)}^{\phi(a)} \mathbf{D}^{\mathbf{X}} \cdot \Delta_a^b \mathbf{F} + 2 f_{a,b} d_{\phi(a),b} \qquad (46)$$

$D^X$ of equation (46) will be described later.

A replica circuit 50 includes a flow matrix memory 51a, a state-aligned D matrix memory 51b, differential calculation circuits 52a and 52b, multiplexers 53a, 53b1, and 53b2, a dot product circuit 54, a register 55, a multiplier circuit 56, an adder circuit 57, and a selector circuit 58.

The flow matrix memory 51a stores a flow matrix F.

The state-aligned D matrix memory 51b stores a state-aligned D matrix ($D^X$) that is an update of a distance matrix. $D^X$ is a matrix obtained by reordering the columns of the distance matrix according to the current assignment state in order to minimize the computational cost of generating a vector ΔD with the correct matrix element order. For example, in the case of QAP, $D^X$ may be represented by a multiplication of the transposed matrix $X^T$ of a binary state matrix X representing the current assignment state by the original distance matrix D.

The use of this $D^X$ makes it possible to calculate the vector ΔD without the need for reordering the matrix elements.

In the example of FIG. 19, each of the flow matrix memory 51a and state-aligned D matrix memory 51b is a dual-port memory with two ports.

The differential calculation circuit 52a calculates $\Delta_a^b F$ of equation (25) .

The differential calculation circuit 52b calculates $\Delta_{\varphi(b)}^{\varphi(a)} D^X$ with equation (26), using $D^X_{\varphi(a),*}$ and $D^X_{\varphi(b),*}$ instead of $D_{\varphi(a),*}$ and $D_{\varphi(b),*}$.

The multiplexer 53a selects $f_{a,b}$ from $F_{a,*}$ and outputs $f_{a,b}$.

The multiplexers 53b1 and 53b2 select $d_{\varphi(a),b}$ from $D^X_{\varphi(a),*}$ and outputs $d_{\varphi(a),b}$.

The dot product circuit 54 calculates the dot product of $\Delta_a^b F$ and $\Delta_{\varphi(b)}^{\varphi(a)} D^X$. The dot product circuit 54 is implemented by a plurality of multipliers connected in parallel, for example.

The register 55 holds a coefficient of "2."

The multiplier circuit 56 calculates $2 f_{a,b} d_{\varphi(a),b}$.

The adder circuit 57 adds $2 f_{a,b} d_{\varphi(a),b}$ to the calculated dot product to thereby obtain ΔC, and outputs ΔC.

The selector circuit 58 selects either the distance matrix D supplied from the MCU 22 or $d_{\varphi(a),b}$ output from the multiplexer 53b2, and supplies the selected one to the state-aligned D matrix memory 51b.

In this configuration, a destination exchange between entities (assignment change) that causes ΔC is proposed, and when the proposal is accepted, columns of the state-aligned D matrix are swapped so as to correspond to the accepted assignment state. The swapping may be performed by a switch that is not illustrated.

For example, the multiplexer 53b1 sequentially selects the value of a first column from each row of the state-aligned D matrix read for the swapping from the state-aligned D matrix memory 51b and outputs the value. The multiplexer 53b2 sequentially selects the value of a second column from each row of the state-aligned D matrix read from the state-aligned D matrix memory 51b and outputs the value.

The switch writes, in the state-aligned D matrix memory 51b, the value output from the multiplexer 53b1 at a place where the value output from the multiplexer 53b2 has been stored and writes the value output from the multiplexer 53b2 at a place where the value output from the multiplexer 53b1 has been stored, so as to swap their storage locations.

By applying the F/D matrix element generation circuit 36 illustrated in FIG. 8 as the multiplexers 53a, 53b1, and 53b2 of the replica circuit 50 described above, it becomes possible to generate matrix elements for use in the $\Delta C$ calculation. In addition, by applying the differential matrix generation circuit 40a illustrated in FIG. 12 as the differential calculation circuits 52a and 52b, it becomes possible to generate differences between matrix elements for use in the $\Delta C$ calculation. This eliminates the need to store one of either the flow matrix F or the distance matrix D (or $D^X$) in the memory, which makes it possible to further reduce the memory footprint.

In this connection, the above-described processing contents (for example, FIGS. 14 to 18 and others) of the data processing apparatus in each of the above embodiments may be implemented in software by a computer running programs.

The programs may be stored in a computer-readable storage medium. Storage media include magnetic disks, optical discs, magneto-optical disks, semiconductor memories, and others, for example. The magnetic disks include flexible disks (FDs) and HDDs. The optical discs include compact discs (CDs), CD-recordable (CD-Rs), CD-rewritable (CD-RWs), digital versatile discs (DVDs), DVD-Rs, DVD-RWs, and others. The programs may be stored in portable storage media, which are then distributed. In this case, the programs may be copied from a portable storage medium to another storage medium and then executed.

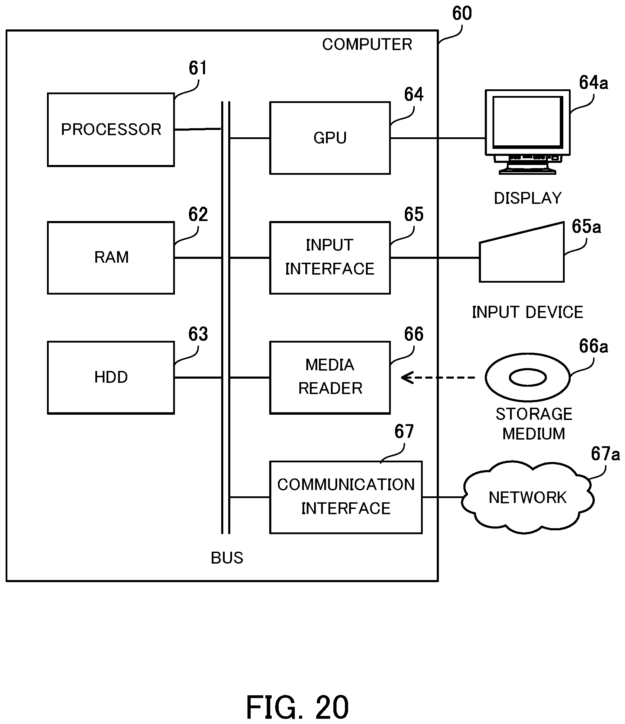

FIG. 20 illustrates an example of hardware of a computer that is an example of the data processing apparatus.

The computer 60 includes a processor 61, a RAM 62, an HDD 63, a GPU 64, an input interface 65, a media reader 66, and a communication interface 67. These units are connected to a bus.

The processor 61 is a processor including operational circuits that execute program instructions. For example, the processor 61 is a CPU, GPU, DSP, or another. The processor 61 loads at least part of a program or data from the HDD 63 to the RAM 62 and executes the program. For example, the processor 61 may include a plurality of processor cores to allow the plurality of replica circuits 21a1 to 21a32 to operate in parallel, as illustrated in FIG. 6. The computer 60 may include one or more processors. A set of multiple processors (multiprocessor) may be called a "processor," and the one or more processors may be referred to as "processor circuitry." Each of the processors may perform one or more, or all, of the processes, described herein. Optionally, different processors may perform different ones of the processes.

The RAM 62 is a volatile semiconductor memory device that temporarily stores a program to be executed by the processor 61 or data to be used by the processor 61 in processing. The computer 60 may include another type of memory than the RAM 62 or include a plurality of memories.

The HDD 63 is a non-volatile storage device that holds software programs, such as operating system (OS), middleware, and application software, and data. For example, the programs include a program that causes the computer 60 to search for a solution to an assignment problem as described above. In this connection, the computer 60 may include another type of storage device, such as a flash memory or a solid state drive (SSD), or may include a plurality of non-volatile storage devices.

The GPU 64 outputs images (for example, an image indicating a result of solving an assignment problem) to a display 64a connected to the computer 60 in accordance with instructions from the processor 61. A cathode ray tube (CRT) display, a liquid crystal display (LCD), a plasma display panel (PDP), an organic electro-luminescence (OEL) display, or the like may be used as the display 64a.

The input interface 65 receives an input signal from an input device 65a connected to the computer 60 and outputs it to the processor 61. A pointing device such as a mouse, a touch panel, a touch pad, or a track ball, a keyboard, a remote controller, a button switch, or the like may be used as the input device 65a. In addition, plural types of input devices may be connected to the computer 60.

The media reader 66 is a reading device that reads programs and data from a storage medium 66a. A magnetic disk, an optical disc, a magneto-optical (MO) disk, a semiconductor memory, or the like may be used as the storage medium 66a. Magnetic disks include FDs and HDDs. Optical discs include CDs and DVDs.

For example, the media reader 66 copies a program and data read from the storage medium 66a to another storage medium such as the RAM 62 or the HDD 63. The program read is executed by the processor 61, for example. The storage medium 66a may be a portable storage medium and be used for distributing the program and data. The storage medium 66a and HDD 63 may be referred to as computer-readable storage media.

The communication interface 67 is connected to a network 67a and communicates with other information processing apparatuses over the network 67a. The communication interface 67 may be a wired communication interface connected to a communication device such as a switch by a cable or a wireless communication interface connected to a base station by a wireless link.

The embodiments relating to a data processing apparatus, computer program, and data processing method have been described by way of example only, and are not limited to the above description.

According to one aspect, the present disclosure makes it possible to reduce memory footprint in solving an assignment problem.

In any of the above aspects, the various features may be implemented in hardware, or as software modules running on one or more processors/computers.

The invention also provides a computer program or a computer program product comprising instructions which, when executed by a computer, cause the computer to carry out any of the methods/method steps described herein, and a non-transitory computer-readable medium comprising instructions which, when executed by a computer, cause the computer to carry out any of the methods/method steps described herein. A computer program embodying the invention may be stored on a non-transitory computer-readable medium, or it could, for example, be in the form of a signal such as a downloadable data signal provided from an Internet website, or it could be in any other form.

## Claims

1. A data processing apparatus comprising:

   storage means (11) for storing one of either a flow matrix or a distance matrix for an assignment problem having an evaluation function represented by a matrix operation of the flow matrix and the distance matrix; and
   processing means (12) for selecting a first entity and a second entity from a plurality of entities to be assigned to a plurality of destinations, reading, from the storage means, at least one first matrix element corresponding to the first entity and the second entity out of the one of either the flow matrix or the distance matrix, generating at least one second matrix element for another of either the flow matrix or the distance matrix, which is a patterned matrix, based on the first entity and the second entity, calculating a change in a value of the evaluation function resulting from an assignment change of changing a destination of the first entity or the second entity, using the at least one first matrix element and the at least one second matrix element, determining based on the change whether to allow the assignment change, and updating an assignment state upon determining to allow the assignment change.

2. The data processing apparatus according to claim 1, wherein the at least one second matrix element is used for calculating the change resulting from the assignment change of exchanging destinations of the first entity and the second entity.

3. The data processing apparatus according to claim 1 or 2, wherein the at least one second matrix element is used for calculating the change resulting from the assignment change of assigning the second entity to a first destination of the first entity.

4. The data processing apparatus according to any of the preceding claims, wherein

   the storage means includes a first memory (34) that stores the one of either the flow matrix or the distance matrix, and a second memory (35) that stores diagonal elements of the distance matrix, and
   the processing means calculates the change, based on the at least one first matrix element, the at least one second matrix element, and at least one third matrix element read from the second memory.

5. The data processing apparatus according to any of the preceding claims, wherein in response to the assignment problem being a quadratic multiple knapsack problem (QMKP),

   the distance matrix is patterned such that diagonal elements of the distance matrix except for one diagonal element have a value of 1 and other matrix elements of the distance matrix have a value of 0, and
   the processing means generates 1 or 0 as the at least one second matrix element for the distance matrix, based on a first destination of the first entity and a second destination of the second entity.

6. A computer program that causes a computer to perform a process comprising:

storing, in storage means (11), one of either a flow matrix or a distance matrix for an assignment problem having an evaluation function represented by a matrix operation of the flow matrix and the distance matrix;

selecting a first entity and a second entity from a plurality of entities to be assigned to a plurality of destinations;

reading, from the storage means, at least one first matrix element corresponding to the first entity and the second entity out of the one of either the flow matrix or the distance matrix;

generating at least one second matrix element for another of either the flow matrix or the distance matrix, which is a patterned matrix, based on the first entity and the second entity;

calculating a change in a value of the evaluation function resulting from an assignment change of changing a destination of the first entity or the second entity, using the at least one first matrix element and the at least one second matrix element;

determining based on the change whether to allow the assignment change; and

updating an assignment state upon determining to allow the assignment change.

7. A data processing method executed by a computer, the data processing method comprising:

storing, in storage means (11), one of either a flow matrix or a distance matrix for an assignment problem having an evaluation function represented by a matrix operation of the flow matrix and the distance matrix;

selecting a first entity and a second entity from a plurality of entities to be assigned to a plurality of destinations;

reading at least one first matrix element corresponding to the first entity and the second entity out of the one of either the flow matrix or the distance matrix from the storage means;

generating at least one second matrix element for another of either the flow matrix or the distance matrix, which is a patterned matrix, based on the first entity and the second entity;

calculating a change in a value of the evaluation function resulting from an assignment change of changing a destination of the first entity or the second entity, using the at least one first matrix element and the at least one second matrix element;

determining based on the change whether to allow the assignment change; and

updating an assignment state upon determining to allow the assignment change.

EXAMPLE OF SOLVING QAP

$\mathbf{F} = (f_{i,j}) \in \mathbb{R}^{n \times n}$     $\mathbf{D} = (d_{i,j}) \in \mathbb{R}^{n \times n}$

FACILITIES AND FLOWS     DESTINATIONS AND DISTANCES     SOLVE     ASSIGNMENT

$\phi$     X

$\phi(1)=2$
$\phi(2)=3$
$\phi(3)=4$
$\phi(4)=1$

| $x_{1,1}$ 0 | $x_{1,2}$ 1 | $x_{1,3}$ 0 | $x_{1,4}$ 0 |
|---|---|---|---|
| $x_{2,1}$ 0 | $x_{2,2}$ 0 | $x_{2,3}$ 1 | $x_{2,4}$ 0 |
| $x_{3,1}$ 0 | $x_{3,2}$ 0 | $x_{3,3}$ 0 | $x_{3,4}$ 1 |
| $x_{4,1}$ 1 | $x_{4,2}$ 0 | $x_{4,3}$ 0 | $x_{4,4}$ 0 |

ASSIGNMENT STATE
(INTEGER ASSIGNMENT VECTOR $\phi$
OR BINARY STATE MATRIX X)

FIG. 1

EXAMPLE OF SOLVING GQAP

FIG. 2

$$H \qquad\qquad (\Delta F)^T \qquad\qquad \Delta D$$

| $h_{1,1}$ | $h_{1,2}$ | $h_{1,3}$ | $\cdots$ | $h_{1,n}$ |
|---|---|---|---|---|
| $h_{2,1}$ | $h_{2,2}$ | $h_{2,1}$ | $\cdots$ | $h_{2,n}$ |
| $h_{3,1}$ | $h_{3,2}$ | $h_{3,3}$ | $\cdots$ | $h_{3,n}$ |
| $\cdots$ | $\cdots$ | $\cdots$ | $\cdots$ | $\cdots$ |
| $h_{n,1}$ | $h_{n,2}$ | $h_{n,3}$ | $\cdots$ | $h_{n,n}$ |

| $\overset{+}{=}$ | $\delta f_1$ | $\times$ |
| $\overset{+}{=}$ | $\delta f_2$ | $\times$ |
| $\oslash$ | $0$ | $\oslash$ |
| $\cdots$ | $\cdots$ | $\cdots$ |
| $\overset{+}{=}$ | $\delta f_n$ | $\times$ |

| $\delta d_1$ | $\delta d_2$ | $\delta d_3$ | $\cdots$ | $\delta d_n$ |
|---|---|---|---|---|
| $\delta d_1$ | $\delta d_2$ | $\delta d_3$ | $\cdots$ | $\delta d_n$ |
| $\delta d_1$ | $\delta d_2$ | $\delta d_3$ | $\cdots$ | $\delta d_n$ |
| $\cdots$ | $\cdots$ | $\cdots$ | $\cdots$ | $\cdots$ |
| $\delta d_1$ | $\delta d_2$ | $\delta d_3$ | $\cdots$ | $\delta d_n$ |

# FIG. 3

DATA PROCESSING   10
APPARATUS

12

PROCESSING UNIT

12a

CONTROLLER

12b

CIRCUIT UNIT

12b5

LOCAL FIELD
UPDATE CIRCUIT

12b2

ΔC
CALCULATION
CIRCUIT

12b4

ASSIGNMENT
CHANGE
JUDGMENT CIRCUIT

12b1

F/D MATRIX ELEMENT
GENERATION CIRCUIT

12b3

CONSTRAINT
VIOLATION
DETECTION CIRCUIT

12b6

SELECTOR
CIRCUIT

11

STORAGE
UNIT

11b

LOCAL FIELD
STORAGE
MEMORY

11a

F/D
STORAGE
MEMORY

11c

ENTITY SIZE
STORAGE
MEMORY

11d

UNUSED
CAPACITY
STORAGE
MEMORY

# FIG. 4

<QMKP>

DISTANCE MATRIX D(=$D_{KP}$)

| 1 | 0 | 0 | ··· | 0 | 0 |
|---|---|---|-----|---|---|
| 0 | 1 | 0 | ··· | 0 | 0 |
| 0 | 0 | 1 | ··· | 0 | 0 |
| ··· | ··· | ··· | ··· | ··· | ··· |
| 0 | 0 | 0 | ··· | 1 | 0 |
| 0 | 0 | 0 | ··· | 0 | 0 |

FIG. 5A

<TSP>

FLOW MATRIX F

| 0 | 1 | 0 | ··· | 0 | 1 |
|---|---|---|-----|---|---|
| 1 | 0 | 1 | ··· | 0 | 0 |
| 0 | 1 | 0 | ··· | 0 | 0 |
| ··· | ··· | ··· | ··· | ··· | ··· |
| 0 | 0 | 0 | ··· | 0 | 1 |
| 1 | 0 | 0 | ··· | 1 | 0 |

FIG. 5B

<LOP>

DISTANCE MATRIX D

| 0 | 1 | 1 | ··· | 1 | 1 |
|---|---|---|-----|---|---|
| 0 | 0 | 1 | ··· | 1 | 1 |
| 0 | 0 | 0 | ··· | 1 | 1 |
| ··· | ··· | ··· | ··· | ··· | ··· |
| 0 | 0 | 0 | ··· | 0 | 1 |
| 0 | 0 | 0 | ··· | 0 | 0 |

FIG. 5C

FIG. 6

22

MCU

21a1

30

CONTROLLER

$\phi^t, C^t, C_{min}, \phi_{min}$

REPLICA CIRCUIT

31

LOCAL FIELD
STORAGE
MEMORY

32

ENTITY SIZE
STORAGE
MEMORY

33

UNUSED
CAPACITY
STORAGE
MEMORY

41

SELECTOR
CIRCUIT

39

CONSTRAINT
VIOLATION
DETECTION CIRCUIT

40

LOCAL FIELD
UPDATE CIRCUIT

37

$\triangle$ C
CALCULATION
CIRCUIT

38

ASSIGNMENT
CHANGE
JUDGMENT
CIRCUIT

36

F/D MATRIX
ELEMENT
GENERATION
CIRCUIT

y  z

34

F/D
STORAGE
MEMORY

35

$D_I$
STORAGE
MEMORY

FIG. 7

36

36a    36b

SECOND MATRIX ELEMENT
GENERATION CIRCUIT

FIRST MATRIX ELEMENT
GENERATION CIRCUIT

36a3

a, b, $\phi$(a), $\phi$(b),
i, j, l/r, control                    DECODER

j          36a1

0          36a2
$\alpha$

F/D[l/r][i,:]                         F/D[l/r][k,j]
$\beta$                               F/D[l/r][i,j]

FIG. 8

FIG. 9

38

38c    38d

violated? ──────────────▷○──────⊐

38a    38b

θ ────→ [ + ] ──→ [ <0 ] ──────┤ ⟩──→ accept?

△C ──────────────────────────────→ △C

## FIG. 10

$U^t_{\phi(a)}$

$U^t_{\phi(b)}$

$U^{t+1}_{\phi(a)}$

$U^{t+1}_{\phi(b)}$

39

39b1

39b2

39d1

39e

39a2

$s_a$

−

−

+

<0

<0

0

violated?

39a1

0

$s_b$

EX?

39c

39d2

constrained?

FIG. 11

40

$H^t[j,:]$

40f

$H^{t+1}[j,:]$ ←                    + 

40d                                    $\Delta H[:]$            40e

$F/D[l/r][i,j]$ →    −    →    MULTIPLIER CIRCUIT

40c                    $\Delta F/D[l][:]$    40b        $\Delta F/D[r][:]$

EX? →                           REGISTER ←

0 →

$F/D[l/r][k,j]$ →    a, b, $\phi$(a), $\phi$(b),  →    DIFFERENTIAL
                        y, z, l/r, control          MATRIX
                                                    GENERATION    40a
                                                    CIRCUIT

$F/D[l/r][y][:]$ →

$F/D[l/r][z][:]$ →

FIG. 12

FIG. 13

START

INITIALIZATION LOOP
i = 0 ; i < M −1 ; i++ — S10

SET INITIAL
TEMPERATURES T[i]←T⁰[i] — S11

rid[i]←i — S12

REPLICA INITIALIZATION — S13

INITIALIZATION LOOP — S14

SEARCH REPLICA LOOP
i = 0 ; i < M −1 ; i++ — S15

SEARCH PROCESS
(EXCHANGE) — S16

SEARCH REPLICA LOOP — S17

REPLICA EXCHANGE
PROCESS — S18

SEARCH REPLICA LOOP
i = 0 ; i < M −1 ; i++ — S19

SEARCH PROCESS
(RELOCATION) — S20

SEARCH REPLICA LOOP — S21

REPLICA EXCHANGE
PROCESS — S22

S23
IS SEARCH
COMPLETED? — NO

YES

END

FIG. 14

```
        ┌─────────────────────────────┐
        │    REPLICA INITIALIZATION   │
        └─────────────────────────────┘
                      │
                      ▼
        ┌─────────────────────────────┐
        │        INITIALIZE φ         │────  S30
        └─────────────────────────────┘
                      │
                      ▼
        ┌─────────────────────────────┐
        │  CALCULATE INITIAL COST (C) │────  S31
        └─────────────────────────────┘
                      │
                      ▼
        ┌─────────────────────────────┐
        │ CALCULATE INITIAL LOCAL     │────  S32
        │       FIELDS (H)            │
        └─────────────────────────────┘
                      │
                      ▼
        ┌─────────────────────────────┐
        │ CALCULATE INITIAL UNUSED    │────  S33
        │      CAPACITIES (U)         │
        └─────────────────────────────┘
                      │
                      ▼
        ┌─────────────────────────────┐
        │  INITIALIZE MINIMUM VALUES  │────  S34
        │  C_min←C, φ_min←φ           │
        └─────────────────────────────┘
                      │
                      ▼
        ┌─────────────────────────────┐
        │ INITIALIZE ENTITIES THAT    │
        │ ARE CANDIDATES              │────  S35
        │ FOR ASSIGNMENT CHANGE       │
        │ (a AND b FOR EXCHANGE AND   │
        │  a AND b FOR RELOCATION)    │
        └─────────────────────────────┘
                      │
                      ▼
        ┌─────────────────────────────┐
        │           RETURN            │
        └─────────────────────────────┘
```

# FIG. 15

```
      ┌────────────────────────┐
      │   SEARCH PROCESS        │
      │    (EXCHANGE)           │
      └────────────────────────┘
                 │
                 ▼
      ┌────────────────────────┐
      │   ITERATION LOOP        │   S40
      │   i = 1 ; i < I ; i++   │
      └────────────────────────┘
                 │
                 ▼
      ┌────────────────────────┐
      │ SELECT CANDIDATES a AND b FOR │   S41
      │        EXCHANGE         │
      └────────────────────────┘
                 │
                 ▼
      ┌────────────────────────┐
      │     CALCULATE ΔC        │   S42
      └────────────────────────┘
                 │
                 ▼
      ┌────────────────────────┐
      │     CALCULATE ΔS        │   S43
      └────────────────────────┘
                 │
                 ▼
```

CALCULATE $U^{t+1}_{\phi(a)}$ AND $U^{t+1}_{\phi(b)}$ — S44

ARE CONSTRAINT CONDITIONS SATISFIED? — S45  NO

YES

PERFORM CALCULATION FOR ASSIGNMENT CHANGE JUDGMENT — S46

IS ASSIGNMENT CHANGE TO BE ALLOWED? — S47  NO

YES

UPDATE H — S48

UPDATE C — S49

UPDATE $U_{\phi(a)}$ AND $U_{\phi(b)}$ — S50

$\phi(a), \phi(b) \leftarrow \phi(b), \phi(a)$ — S51

$C < C_{min}$? — S52  NO

YES

$C_{min} \leftarrow C,\ \phi_{min} \leftarrow \phi$ — S53

ITERATION LOOP — S54

RETURN

FIG. 16

SEARCH PROCESS
(RELOCATION)

ITERATION LOOP
i = 1 ; i < I ; i++ — S60

SELECT CANDIDATES a AND b FOR
RELOCATION — S61

CALCULATE $\Delta C$ — S62

CALCULATE $\Delta S$ — S63

CALCULATE $U^{t+1}{}_{\phi(a)}$ AND $U^{t+1}{}_{\phi(b)}$ — S64

ARE
CONSTRAINT CONDITIONS
SATISFIED? — S65

NO

YES

PERFORM CALCULATION FOR
ASSIGNMENT CHANGE JUDGMENT — S66

IS
ASSIGNMENT CHANGE TO BE
ALLOWED? — S67

NO

YES

UPDATE H — S68

UPDATE C — S69

UPDATE $U_{\phi(a)}$ AND $U_{\phi(b)}$ — S70

$\phi(a) \leftarrow b$ — S71

$C < C_{min}$? — S72

NO

YES

$C_{min} \leftarrow C,\ \phi_{min} \leftarrow \phi$ — S73

ITERATION LOOP — S74

RETURN

FIG. 17

START

S80

BYPASS MODE? — NO

YES

S81

QMKP? — NO

YES

S82

IS MATRIX ELEMENT OF ROW OTHER THAN m-TH ROW REQUESTED? — NO

YES

S83

ROW ADDRESS == COLUMN ADDRESS? — NO

YES

S84

SELECT 1

S85

SELECT 0

S86

TSP? — NO

YES

S87

ROW ADDRESS == (COLUMN ADDRESS + 1)%N? OR COLUMN ADDRESS == (ROW ADDRESS + 1)%N?

YES

S88

SELECT 1

NO

S89

SELECT 0

S90

LOP? — NO

YES

S91

COLUMN ADDRESS > ROW ADDRESS? — NO

YES

S92

SELECT 1

S93

SELECT 0

S94

SELECT DATA READ FROM F/D STORAGE MEMORY

END

FIG. 18

FIG. 19

FIG. 20

Europäisches
Patentamt

European
Patent Office

Office européen
des brevets

# EUROPEAN SEARCH REPORT

**Application Number**

EP 24 19 2196

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/335487 A1 (KATAYAMA KENTARO [JP]) 20 October 2022 (2022-10-20) <br> * paragraph [0003] * <br> * paragraph [0056] - paragraph [0081] * <br> * paragraph [0094] * <br> * figure 1 * | 1-7 | INV. <br> G06N5/01 <br> G06N7/01 |
| A | LI MINGJIE ET AL: "A flow based formulation and a reinforcement learning based strategic oscillation for cross-dock door assignment", EUROPEAN JOURNAL OF OPERATIONAL RESEARCH, ELSEVIER, AMSTERDAM, NL, vol. 312, no. 2, 14 July 2023 (2023-07-14) , pages 473-492, XP087394130, ISSN: 0377-2217, DOI: 10.1016/J.EJOR.2023.07.014 [retrieved on 2023-07-14] * Section 1.1.3 * | 5 | |

**TECHNICAL FIELDS SEARCHED (IPC)**

G06N

The present search report has been drawn up for all claims

| Place of search | Date of completion of the search | Examiner |
|---|---|---|
| The Hague | 13 February 2025 | Baldan, Marco |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 19 2196

This annex lists the patent family members relating to the patent documents cited in the above-mentioned European search report.
The members are as contained in the European Patent Office EDP file on
The European Patent Office is in no way liable for these particulars which are merely given for the purpose of information.

13-02-2025

| Patent document cited in search report | Publication date | Patent family member(s) | Publication date |
|---|---|---|---|
| US 2022335487 A1 | 20-10-2022 | CN 115222052 A | 21-10-2022 |
| | | EP 4080417 A1 | 26-10-2022 |
| | | JP 2022165250 A | 31-10-2022 |
| | | US 2022335487 A1 | 20-10-2022 |

EPO FORM P0459

For more details about this annex : see Official Journal of the European Patent Office, No. 12/82

**REFERENCES CITED IN THE DESCRIPTION**

**Patent documents cited in the description**

- US 20210326679